(19) Europäisches Patentamt
European Patent Office
Office européen des brevets

(11) **EP 4 578 738 A1**

(12) **EUROPEAN PATENT APPLICATION**
published in accordance with Art. 153(4) EPC

(43) Date of publication:
**02.07.2025 Bulletin 2025/27**

(21) Application number: 23857622.7

(22) Date of filing: **10.08.2023**

(51) International Patent Classification (IPC):
**B60R 1/28** (2022.01)    **B60R 1/12** (2006.01)

(52) Cooperative Patent Classification (CPC):
**B60R 1/12; B60R 1/28**

(86) International application number:
**PCT/KR2023/011851**

(87) International publication number:
**WO 2024/043588 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.08.2022 KR 20220107620**

(71) Applicant: **LG Electronics Inc.**
**Yeongdeungpo-gu**
**Seoul 07336 (KR)**

(72) Inventors:
• **CHOI, Sunghwan**
  **Seoul 06772 (KR)**
• **PARK, Junsic**
  **Seoul 06772 (KR)**
• **LEE, Jaeyoung**
  **Seoul 06772 (KR)**

(74) Representative: **Vossius & Partner**
**Patentanwälte Rechtsanwälte mbB**
**Siebertstraße 3**
**81675 München (DE)**

(54) **DEVICE FOR PROVIDING AUGMENTED REALITY INFORMATION ON BASIS OF DIGITAL MIRROR AND METHOD FOR CONTROLLING DEVICE**

(57)    The present invention relates to a device that displays augmented reality information on a display on the basis of a digital mirror, the device comprising: an interface unit that receives images including a road environment and an object around a vehicle from a plurality of cameras including a first camera and a second camera, and receives sensing information of a sensed driving state of the vehicle; an AR module that renders at least one augmented reality object on the basis of the sensing information on the basis of an image captured by at least one of the plurality of cameras; and a processor that controls the AR module to render a first augmented reality object related to a first object from among objects included in the image of the first camera, and controls a display unit of the vehicle via the interface unit to display a second augmented reality object related to the first augmented reality object in the image of the second camera, in a direction opposite to the first object.

*FIG. 2*

START

IDENTIFY FIRST OBJECT AMONG OBJECTS INCLUDED IN FIRST CAMERA — S200

RENDER AND DISPLAY FIRST AR OBJECT RELATED TO IDENTIFIED FIRST OBJECT — S202

DETERMINE SECOND CAMERA BASED ON ESTIMATED POSITION OF FIRST OBJECT AFTER CERTAIN PERIOD OF TIME — S204

DETERMINE DIRECTION OPPOSING POSITION (OR ESTIMATED POSITION) OF FIRST OBJECT IN SECOND CAMERA IMAGE — S206

RENDER AND DISPLAY SECOND AR OBJECT RELATED TO FIRST OBJECT AT ONE POSITION IN SECOND CAMERA IMAGE ACCORDING TO DETERMINED OPPOSING DIRECTION — S208

END

EP 4 578 738 A1

## Description

## Technical Field

The present disclosure relates to a display device mounted in a vehicle, and more specifically, to a device that displays augmented reality information on a display based on a digital mirror.

## Background Art

Nowadays, automotive technology is constantly evolving and new technologies are emerging. One of the new technologies emerging thanks to these automotive technologies is a digital mirror, which replaces existing side mirrors or rear-view mirror with cameras.

The digital mirror may replace a mirror, such as a side mirror or room (rearview) mirror that reflects the rear of a vehicle, and may be configured to display an image acquired by a camera, which is mounted to oppose the rear of the vehicle, through a display replacing the room mirror or a center information display (CID).

Such digital mirrors have the advantages of providing a wider field of view (more than 25 degrees of rearward field of view from a driver's seat) than typical side mirrors (18 degrees of rearward field of view from the driver's seat), and having various functions, such as blind-spot warning (BCW), and the like, as additional functions. Side mirrors require a certain level of a reflective surface area because a user must visually check an image of the rear of the vehicle reflected on a reflective surface of the mirror, whereas cameras do not require for a large reflective surface area and may be provided in a compact shape depending on the arrangement of components of the cameras, o minimize blind spots in a rear view and also improve forward and side views. The cameras also have the advantage of increasing fuel efficiency by minimizing air resistance compared to the existing side mirrors. These superior advantages over the side mirrors accelerate the trend of replacing the side mirrors with the digital mirrors.

Augmented reality (AR) technology is emerging these days, which additionally outputs virtual objects to the real world by using graphic objects that overlap images captured by a camera. A vehicle is currently providing a driver with additional information related to an environment around the vehicle, a vehicle status, and a driving route (travel route) of the vehicle through the AR technology, and thus the driver may intuitively recognize the vehicle and the traveling environment of the vehicle. Therefore, traveling efficiency and convenience may be further improved. In the case of using such AR technology, various types of information necessary for driving a vehicle may be provided based on the real world.

However, a digital mirror also displays an image acquired through a camera on a display. Accordingly, customer demand is rising for the application of AR technology in digital mirrors.

## Disclosure of invention

## Technical Problem

The present disclosure aims to solve the above-mentioned problems and other drawbacks, and provides a device for providing augmented reality (AR) information, on the basis of a digital mirror, which is capable of recognizing objects displayed on a digital mirror and providing a user with information related to the recognized objects as an AR object, and a method for controlling the device.

The present disclosure aims to solve the above-mentioned problem and other drawbacks, and provides a device for providing augmented reality (AR) information, on the basis of a digital mirror, which is capable of interoperating with first and second cameras, which capture images including a first object, among a plurality of cameras, and displaying an AR object related to the first object, and a method for controlling the device.

## Technical Solution

According to an aspect of the disclosure to achieve those aspect and other advantages, a device for providing augmented reality (AR) information according to an embodiment includes an interface unit configured to receive images, including a road environment around a vehicle and objects around the vehicle, from a plurality of cameras including a first camera and a second camera, and receive sensing information related to a traveling state of the vehicle, an AR module configured to render at least one AR object based on the sensing information, on the basis of an image captured by at least one of the plurality of cameras, and a processor configured to control the AR module to render a first AR object related to a first object, among objects included in an image of the first camera, and control a display unit of the vehicle through the interface unit so that a second AR object related to the first AR object is displayed in an image of the second camera in a direction opposing the first object.

In an embodiment, the processor may calculate a three-dimensional position and relative speed of the first object detected from the image of the first camera, estimate a three-dimensional position of the first object based on a time elapsed from a time at which the first object has been detected, and control the display unit such that the first AR object indicating the estimated three-dimensional position of the first object is displayed on the image of the first camera within a certain time in case that the first object is not detected from the image of the first camera.

In an embodiment, the processor may display information related to the first object in case that a user selects the AR object.

In an embodiment, the processor may determine a camera for capturing an image around the estimated three-dimensional position, of the plurality of cameras, as a second camera based on the estimated three-dimensional position of the first object.

In an embodiment, the processor may control the interface unit such that an image of the second camera is displayed on the display unit, the image of the second camera including the second AR object announcing appearance of the first object based on the estimated position of the first object, in case that the second camera is determined.

In an embodiment, the processor may predict a time, at which the first object is to be included in the image of the second camera, based on the estimated position of the first object, in case that the first object is not detected from the image of the first camera, and change at least one of the first AR object or the second AR object according to a time elapsed from a time point at which the first object is not detected from the image of the first camera.

In an embodiment, the processor may change in opposite ways transparency of the first AR object and transparency of the second AR object or saturation of the first AR object and saturation of the second AR object according to a time elapsed from a time point at which the first object is not detected.

In an embodiment, the processor may detect the first object based on an image captured by at least one other camera, except for the second camera, in case that the first object is not detected from the image of the determined second camera, and control the interface unit such that an AR object related to the first object is displayed based on the image captured by the at least one another camera detecting the first object.

In an embodiment, the processor may control the interface unit such that the AR object related to the first object is displayed at a position corresponding to the estimated three-dimensional position on the image captured by the second camera, in case that the first object is not detected from the image captured by the at least one other camera.

In an embodiment, the processor may calculate a distance from a center of the vehicle to the first object, calculate a time at which the first object deviates from a field of view (FOV) of the first camera, and calculate an elapsed time based on the calculated time, and the processor may estimate a plurality of candidate positions of the first object as three-dimensional positions according to different lapsed times for each preset unit time, determine the second camera based on at least one of the plurality of candidate positions, and identify the first object included in the image captured by the second camera based on one of the plurality of candidate positions.

In an embodiment, the processor may project a shape corresponding to the first object onto each of the plurality of estimated positions in an image area including an area displayed through the display unit, and determine at least one candidate position including at least a portion of the shape corresponding to the first object, as a final candidate position, in a partial area in the image area displayed through the display unit, and the processor may estimate one final candidate position corresponding to an object having a shape, which overlaps the projected shape corresponding to the first object, among objects included in the image captured by the second camera, as the three-dimensional position of the first object.

In an embodiment, the processor may detect an occurrence of a preset safe driving-related event based on at least one of a distance between the first object included in the image of the second camera and the vehicle, a relative speed of the first object, a traveling direction of the first object, and a traveling direction of the vehicle, and the processor may crop a partial image including an area, in which the first object is included, of the image of the second camera, and control the interface unit such that the cropped image is scaled and displayed, in case that the safe driving-related event occurs.

In an embodiment, the processor may crop a portion of the image of the second camera to include at least one of a specific surface of the first object or an approach path of the first object, according to an aspect ratio of the display unit.

In an embodiment, the processor may detect a preset user operation for the vehicle, and determines a third camera among the plurality of cameras based on the detected operation, and the processor may crop a partial area including at least one object from an image captured by the third camera, and control the interface unit such that an image of the cropped area is scaled and displayed on the display unit.

In an embodiment, the processor may control the AR module to determine a level of risk with respect to at least one object included in the cropped area based on at least one of a distance, speed, and traveling direction, and display a different AR object according to the determined level of risk.

In an embodiment, the user operation may include an operation of turning on a turn signal to enter a specific lane or an operation of gazing at a mirror corresponding to a specific direction for at least a certain period of time, and the processor may determine a camera, which captures the lane according to the turned-on turn signal or the specific direction corresponding to the mirror at which the user gazes for at least the certain period of time, as the third camera.

According to one aspect of the disclosure to achieve the above or other purposes, a method for controlling a device for providing augmented reality (AR) information includes identifying a first object included in a first camera among a plurality of cameras arranged in a vehicle, displaying a first AR image including a first AR object related to the identified first object, estimating at least one position of the first object after a certain period of time has elapsed, determining a second camera to acquire an image of the first object after the lapse of the certain period of time based on the estimated position of the first object, among the plurality of cameras, determining a display position according to a direction opposing the first object from an image acquired by the second camera, and controlling a display of the vehicle which displays the image acquired by the second camera, so that a second AR object related to the first object, different from the first AR object, is displayed at the determined display position.

## Advantageous Effects of Invention

According to at least one of embodiments, the disclosure has the effect of providing information related to an object displayed on a digital mirror through augmented reality (AR).

According to at least one of embodiments, AR information related to an object, which disappears from a field of view of a user gazing at the front, may be displayed through the digital mirror, thereby providing the effect of allowing the user to check information related to the object, even though the object enters a blind spot.

## Brief Description of Drawings

FIG. 1 is a block diagram of a device for providing augmented reality (AR) information on the basis of a digital mirror according to an embodiment, connected to a vehicle.

FIG. 2 is a flowchart of an operation process in which the AR information providing device according to an embodiment displays an AR object related to an object recognized by a first camera on an image captured by a second camera.

FIG. 3 is a diagram of an example in which a surrounding object moves relative to movement of a vehicle, in which the AR information providing device according to an embodiment is mounted.

FIG. 4 is a diagram of an example of AR objects displayed on a CID and a room mirror display according to the relative movement of the object illustrated in FIG. 3.

FIG. 5 is a flowchart of an operation process in which the AR information providing device according to an embodiment determines a second camera among a plurality of cameras based on an estimated position of the first object after a certain period of time.

FIG. 6 is a diagram of an example in which the AR information providing device according to an embodiment estimates first object estimated positions after a certain period of time.

FIG. 7 is a flowchart of an operation process in which the AR information providing device according to an embodiment displays an AR object related to the first object recognized in an image captured by the first camera on an image captured by the second camera.

FIG. 8 is a diagram of an example in which the AR information providing device according to an embodiment displays an AR object to indicate a position of the first object obscured by an obstacle.

FIG. 9 is a flowchart of an operation process in which the AR information providing device according to an embodiment detects an object corresponding to the first object inside an image captured by the second camera.

FIG. 10 is a diagram of an example in which the AR information providing device according to an embodiment determines candidate positions in a corresponding image captured by the second camera, on which an estimated position of the first object after a certain period of time is projected.

FIG. 11 is a diagram of an example in which the AR information providing device according to an embodiment detects an object corresponding to the first object based on the generated candidate objects.

FIG. 12 and FIG. 13 are diagrams of an example in which the AR information providing device according to an embodiment displays different AR information related to objects around the vehicle depending on a distance from the vehicle.

FIG. 14 is a diagram of an example in which the AR information providing device according to an embodiment differently displays an AR object for announcing appearance of the first object depending on an estimated position of the first object.

## Mode for the Invention

It should be noted that the technical terms used in this specification are only used to describe specific embodiments and are not intended to limit the present disclosure. A singular representation used herein may include a plural representation unless it represents a definitely different meaning from the context. In general, a suffix such as "module" and "unit" may be used to refer to elements or components. Use of such a suffix herein is merely intended to facilitate description of the specification, and the suffix itself is not intended to give any special meaning or function.

In this application, the terms "comprising" and "including" should not be construed to necessarily include all of the elements or steps disclosed herein, and should be construed not to include some of the elements or steps thereof, or should be construed to further include additional elements or steps.

In describing the present disclosure, if a detailed explanation for a related known function or construction is considered to unnecessarily divert the gist of the present disclosure, such explanation has been omitted but would be understood by those skilled in the art.

The accompanying drawings are used to help easily understand various technical features and it should be understood that the embodiments presented herein are not limited by the accompanying drawings. As such, the present disclosure should be construed to extend to any alterations, equivalents, and substitutes in addition to those which are particularly set out in the accompanying drawings. It should also be understood that each of embodiments described below and combinations of those embodiments are all changes, equivalents, or substitutes which may belong to the idea and scope of the present disclosure.

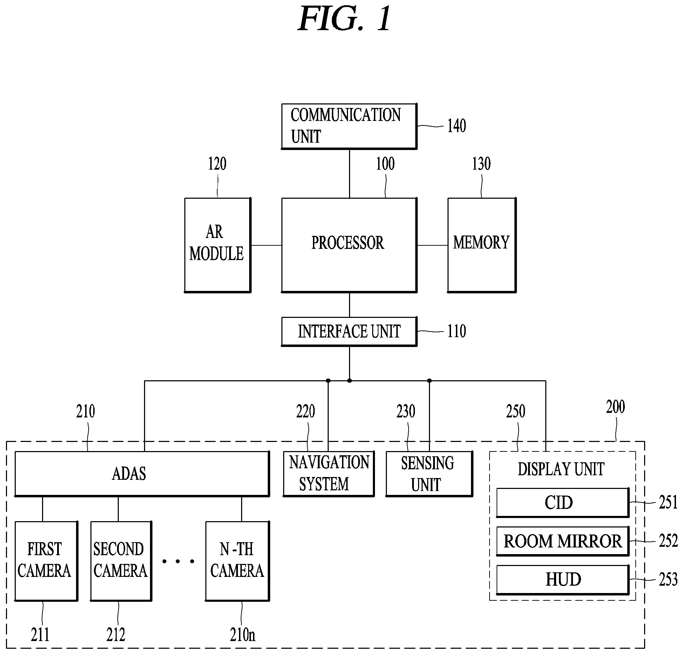

FIG. 1 is a block diagram of a device for providing augmented reality (AR) information on the basis of a digital mirror according to an embodiment, connected to a vehicle.

Referring to FIG. 1, a device for providing augmented reality (AR) information on the basis of a digital mirror (hereinafter, referred to as an augmented reality (AR) information providing device) according to an embodiment may include a processor 100, an interface unit 110 connected to the processor 100, an AR module 120, a memory 130, and a communication unit 140. The components illustrated in FIG. 1 are not essential for implementing the AR information providing device according to an embodiment, and thus the AR information providing device described in this specification may have more or fewer components than the components listed above.

First, explaining the interface unit 110, the interface unit 110 may be connected to an interface unit (not shown, hereinafter, referred to as a vehicle interface unit) of a vehicle 200, and may receive various pieces of information provided from the vehicle 200 through the vehicle interface unit. Here, the vehicle interface unit may serve as a passage with various types of external devices connected to each component of the vehicle 200. For example, the vehicle interface unit may include various ports connected to the interface unit 110 and may be connected to the interface unit 110 through the ports. The vehicle interface unit may exchange data with the interface unit 110.

The interface unit 110 may be connected to each component of the vehicle 200 through the vehicle interface unit. For example, the interface unit 110 may be connected to an advanced driver assistance system (ADAS) 210 arranged in the vehicle 200. The ADAS 210 is a system that recognizes and determines some of numerous situations that may occur during driving by itself, for example, may be a system, such as 'automatic emergency braking (AEB)' that automatically reduces a speed or stops a vehicle without a driver stepping on brakes in the event of a risk of collision, 'lane keeping assist system (LKAS)' that keeps a lane by adjusting a driving direction upon lane departure, 'advanced smart cruise control (ASCC)' that automatically maintains a distance from a vehicle in front while driving at a preset speed, 'active blind spot detection (ABSD)' that detects a blind spot collision risk and helps a safe lane change, 'around view monitoring system (AVM)' that visually shows a situation around a vehicle, and the like.

For this purpose, the ADAS 210 may include a plurality of cameras (a first camera 211, a second camera 212, ..., an n-th camera 210n). Here, the plurality of cameras may be cameras provided in the vehicle 200 and may be cameras each having a field of view set to acquire an image in a different direction centered on the vehicle 200.

For example, the first camera 211 may be a camera that acquires an image of the front of the vehicle 200. The second camera 212 may be a camera that acquires an image of the rear of the vehicle 200. A third camera (not shown) and a fourth camera (not shown) may be cameras that acquire images of left and right sides of the vehicle, respectively. A fifth camera (not shown) may be a camera (e.g., a camera corresponding to a left-side mirror) for acquiring an image of the rear of the vehicle 200 on the left side of the vehicle 200, and a sixth camera (not shown) may be a camera (e.g., a camera corresponding to a right-side mirror) for acquiring an image of the rear of the vehicle 200 on the right side of the vehicle 200.

Alternatively, a plurality of front cameras may be arranged to acquire images of the front of the vehicle 200. Likewise, a plurality of rear cameras may be arranged to acquire images of the rear of the vehicle 200, and a plurality of left-side cameras and right-side cameras may be arranged to acquire images of the left side and right side of the vehicle 200. In this case, the ADAS 210 may distinguish each camera that acquires an image in a specific direction, and combine images acquired from each camera to generate an image in the specific direction. As the image in the specific direction is acquired by the combination of the plurality of cameras, wider angle images with respect to the specific direction may be provided to the user.

In some embodiments, the ADAS 210 may recognize various objects around the vehicle using the plurality of cameras and calculate relative positions of the recognized objects based on the vehicle 200, such as distances and angles between the vehicle 200 and the recognized objects. Information detected and calculated by the ADAS 210, for example, object information including information about the recognized objects and the relative positions of the recognized objects, may be transmitted to the processor 100 through the interface unit 110.

The interface unit 110 may be connected to a navigation system 220 of the vehicle 200 through the vehicle interface unit. Navigation information provided from the connected navigation system 220 may be transmitted to the processor 100. Then, the processor 100 may detect a position of the vehicle 200 on a current route on the basis of the navigation information and a vehicle position detected by a sensing unit of the vehicle 200.

The interface unit 110 may also be connected to a sensing unit 230 that includes a plurality of sensors mounted in the vehicle 200. The plurality of sensors arranged in the sensing unit 230 may include a sensor for identifying the position of the vehicle 200 and sensors for detecting the status of the vehicle and a driver's status.

For example, the sensing unit 230 may include a posture sensor (e.g., a yaw sensor, a roll sensor, a pitch sensor, etc.), a collision sensor, a wheel sensor, a speed sensor, a tilt sensor, a weight-detection sensor, a heading sensor, a gyro sensor, a position module, a vehicle forward/reverse movement sensor, a battery sensor, a fuel sensor, a tire sensor, a steering sensor based on the rotation of a steering wheel, an in-vehicle temperature sensor, an in-vehicle humidity sensor, an ultrasonic sensor, an illumination sensor, an accelerator pedal position sensor, a brake pedal position sensor, and the like. The sensing unit 230 may also include an ultrasonic sensor, a LiDAR sensor, a radar sensor, an infrared sensor for detecting the status of a passenger, or internal cameras for detecting the motion of the user. Based on results detected by the sensing unit 230, the processor 100 may detect the user's gesture or the user's movement gazing at a specific direction or a mirror corresponding to the specific direction.

The interface unit 110 may be connected to a display unit 250 that outputs visual information or an audio output unit (not shown) of the vehicle 200 that outputs audio information, through the vehicle interface unit. For example, the audio output unit may include at least one speaker mounted in the vehicle 200. Event information may be provided to the audio output unit according to the control of the processor 100, such that the event information is output through the audio output unit.

The display unit 250 may include a plurality of displays. For example, the display unit 250 may include a center information display (CID) 251, a room mirror display 252, and a head up display (HUD) 253. Here, the room mirror display 252 is a display that displays an image acquired by the rear camera of the vehicle 200, and may be a display (digital mirror) that replaces the role of the existing room mirror.

Each display included in the display unit 250, for example, the CID 251, the room mirror display 252, and the HUD 253, may output images acquired from different cameras of the vehicle 200. Alternatively, any one display may output images acquired by at least two cameras under the control of the processor 100. In this case, the one display may be divided into a plurality of areas, and images acquired from different cameras may be displayed in the respective divided areas.

For example, the CID 251 may simultaneously output an image acquired by a front camera of the vehicle 200 and an image acquired by at least one other camera. In this case, the CID 251 may be divided into three areas, such that an image acquired by a camera, which is arranged on the left side of the vehicle 200 and acquires an image of the left rear side of the vehicle 200, is displayed in a left region, and an image acquired by a camera, which is arranged on the left side of the vehicle and acquires an image of the right rear side of the vehicle 200, is displayed in a right region. An image obtained by the front camera of the vehicle 200 may be displayed in a central region. In this instance, the left region of the CID 251 may play a role of a left digital side mirror, and the right region of the CID 251 may play a role of a right digital side mirror.

In some embodiments, FIG. 1 merely illustrates three displays of the CID 251, the room mirror display 252, and the HUD 253, but of course, many more displays may be included in the display unit 250. For example, a display corresponding to the left digital side mirror and a display corresponding to the right digital side mirror may be further included in the display unit 250.

The interface unit 110 may be connected to an input unit (not shown) of the vehicle 200 that receives user input through the vehicle interface unit. For example, the input unit may include a touch input unit capable of receiving touch input from a passenger of the vehicle 200, for example, the user, or a microphone capable of receiving voice input from the user. In case that user input is received through the input unit, the interface unit 110 may input the received user input into the processor 100.

At least one display provided in the vehicle 200 may form a touch screen capable of both outputting visual information and receiving touch input. In this instance, the interface unit 110 may output an image acquired by at least one camera through the touch screen and receive a user's touch input detected through the touch screen.

In some embodiments, the AR information providing device according to an embodiment may include an AR module 120 that renders and outputs an AR image including an AR object. The AR module 120 may include a scene manager for forming an image including an AR object, i.e., an AR image, and an AR renderer for rendering the image including the AR object on a display.

First, the AR module 120 may receive images sensed by the plurality of cameras connected to the ADAS 210, user gesture information or touch event information sensed by the input unit of the vehicle 200, and information sensed by the ADAS 210, the navigation system 220, the sensing unit 230, and the like, through the interface unit 110.

Here, the images sensed by the plurality of cameras may be received through the interface unit 110, and object identification on the images may be performed under the control of the processor 100. Results of the object identification may be input to the processor 100. The AR module 120 may determine an AR object including information corresponding to a recognized object and determine the determined AR object.

Here, the AR object may be stored in the memory 130. Alternatively, the AR object may be provided from a preset server, for example, a cloud server. In this instance, the AR module 120 may transmit a recognized object and information related to the recognized object, for example, the current position of the vehicle 200 and navigation information, to the cloud server along with the object recognition result, and receive an AR object corresponding to the recognized object in response to the transmitted object recognition result and related information.

The scene manager may determine an area on an image where each AR object is to be arranged, and arrange the determined AR object on the image. The AR renderer may receive image configuration information related to objects arranged in each area on the image from the scene manager. The AR renderer may render an image according to the received image configuration information on at least one display.

In some embodiments, the AR object may include various information related to a recognized object. For example, an AR object corresponding to a specific place or building, for example, a POI object, may include information related to the corresponding place or building, for example, information related to a business office located in the corresponding place or building. In this instance, the information related to the business office may include the name, industry type, and contact of the business office, and services provided by the business office. Information related to the AR object, i.e. AR information, may be displayed on a display based on the user's input applied to the AR object.

In some embodiments, as described above, the AR information providing device according to an embodiment may include a plurality of displays. In this case, the AR module 120 may include a plurality of AR renderers for rendering an image including an AR object on each display. In this instance, the AR module 120 may fuse information sensed by the plurality of cameras connected to the ADAS 210 or the plurality of sensors arranged in the sensing unit 230 under the control of the processor 100, and display AR objects on the plurality of displays so that the images acquired by the plurality of cameras are organically linked based on the fused information.

For example, the AR module 120 may include a fusion unit (not shown) that receives vehicle CAN, GPS, inertial measurement unit (IMU), navigation route information, and the like from the ADAS 210, the sensing unit 230, and the navigation system 220, and calculates a series of matrix information for projecting three-dimensional positions of surrounding objects on a vehicle reference coordinate system onto target displays. Detection values fused in the fusion unit may be shared by each AR renderer. Each AR renderer may generate an AR graphic that is displayed on a different display.

Alternatively, rather than having the plurality of AR renderers as described above, the AR module may be implemented as a plurality of AR modules according to the plurality of displays. In this instance, different scene managers and AR renderers included in the respective AR modules may render AR images displayed on the different displays. For example, as illustrated in FIG. 1, in case that the display unit 250 includes the CID 251, the room mirror display 252, and the HUD 253, AR modules corresponding to the CID 251, the room mirror display 252, and the HUD 253 may be provided, respectively. In this instance, each AR module may be arranged on each display. For example, the AR module may be arranged on each of the CID 251, the room mirror display 252, and the HUD 253.

In this instance, the processor 100 may fuse information sensed by the plurality of cameras connected to the ADAS 210 or the plurality of sensors arranged in the sensing unit 230, and may control the plurality of AR modules so that the images acquired by the plurality of cameras are organically linked based on the fused information.

In this instance, the plurality of AR modules may each receive the detection value of the ADAS 210 and the detection values of the sensing unit 230 through the interface unit 110. Here, in case that the detection values received from the respective AR modules 120 are different, the connectivity of the AR objects displayed on the corresponding displays may be reduced (e.g., a first AR module displays an AR object but a second AR module does not display an AR object due to a difference of fusion results of a GPS sensor). Accordingly, the processor 100 may control the plurality of AR modules to share intermediate operation data of each AR module (e.g., a filtered GPS position of the vehicle, filtered positions of surrounding objects, a type of AR content currently being displayed, and a matrix for a camera position on a road surface for vehicle shake compensation). For example, the processor 100 may use an average of a matrix value calculated by the second AR module and a matrix value calculated by the first AR module with respect to a matrix value associated with the posture of the vehicle, or may allow one of the first or second AR module to receive the matrix value calculated by the other and directly use the received matrix value.

In some embodiments, the memory 130 may store data that supports various functions of the AR information providing device. The memory 130 may store a plurality of application programs (or applications) to be executed by the processor 100, and data and commands for operating the AR module 120 and the interface unit 110. The memory 130 may also store data (e.g., calibration data) for supporting the ADAS 210 and the plurality of cameras connected to the ADAS 210, and data for the operations of the navigation system 220 and the sensing unit 230.

Here, as data for the operation of the navigation system 220, the memory 130 may include map information around the vehicle 200 and information related to a plurality of positions of interest (POI) included in the map. The memory 130 may include AR contents, for example, AR objects, corresponding to the respective POIs included in the map. The AR contents may include various information related to the corresponding POI, i.e., AR information, such as the business name of the POI, industry, services provided, contact information, and selectable menus. Therefore, based on the POI information stored in the memory 130, the AR module 120 may display an image including an AR object, i.e., an AR image, on at least one display included in the display unit 250. The AR module 120 may display AR information related to a POI, which is selected based on a user input with respect to the displayed AR object, on at least one display.

In some embodiments, the POI information and the AR content may be provided from a preset server, for example, a cloud server. In this case, the processor 100 may connect wirelessly with the cloud server through the communication unit 140 and provide position information related to the vehicle 200, obtained by the sensing unit 230, to the cloud server. Then, the cloud server may transmit map information including POI information or information related to at least one POI around the current position of the vehicle 200, and an AR content for each POI, and the POI information and AR content transmitted from the cloud server may be stored in the memory 130.

In some embodiments, the processor 100 may control each connected component and typically control the overall operation of the AR information providing device. First, the processor 100 may receive information provided from the ADAS 210, the navigation system 220, and the sensing unit 230 of the vehicle 200 through the interface unit 110.

Here, the processor 100 may receive images acquired by each of the plurality of cameras through the ADAS 210. The processor 100 may receive recognition results of objects included in the images acquired from each of the plurality of cameras through the ADAS 210. The processor 100 may control the AR module 120, according to the recognition results, such that an AR image in which AR objects for the recognized objects overlap the images acquired by the cameras is rendered. The processor 100 may control the display unit 250 through the interface unit 110 so that the AR image rendered in the AR module 120 is displayed on at least one display.

The processor 100 may receive, from the ADAS 210, information related to a distance (hereinafter, a relative distance) between each recognized object and the vehicle 200 and an angle (hereinafter, a relative angle) according to the position of each recognized object based on the vehicle 200. The processor 100 may receive information related to a traveling direction and a moving speed (hereinafter, a relative speed) of each recognized object according to a current traveling direction and a current speed of the vehicle 200.

The processor 100 may estimate a position of a specific object after a certain period of time based on the received object information, for example, the information related to the relative speed, relative angle, and relative distance. The processor 100 may determine a camera which is to capture an image including the specific object, on the basis of the estimated position.

For example, in case that the specific object is a vehicle traveling in an opposite lane in a direction opposing the vehicle 200, the front camera of the vehicle 200 may obtain an image including the specific object. The processor 100 may control one display, based on the recognition result of the specific object, to display an AR image, in which an AR object corresponding to the specific object is displayed adjacent to the specific object. Here, a camera that has first acquired an image including the specific object may be determined as a first camera.

The ADAS 210 may calculate the relative speed, relative distance, and relative speed of the specific object included in the image of the first camera, and provide results of the calculation to the processor 100. Then, the processor 100 may estimate a position of the specific object after a certain period of time on the basis of the relative speed, relative distance, and relative speed of the specific object received from the ADAS 210. For example, the processor 100 may estimate the position of the specific object after the certain period of time on the basis of a point in time (time point) at which the specific object is not detected by the front camera.

The processor 100 may determine a camera (hereinafter, referred to as a second camera) acquiring an image, in which the specific object is likely to appear, on the basis of the estimated position of the specific object. In this instance, the processor 100 may determine a camera having a field of view, which includes the estimated position of the specific object after the certain period of time, as the second camera. For example, in case that the specific object is a vehicle traveling in an opposite lane in a direction opposing the vehicle 200 as described above, the processor 100 may determine the rear camera of the vehicle 200 as a camera acquiring an image, in which the specific object is likely to appear, i.e., the second camera.

The processor 100 may detect an object corresponding to information for recognizing the specific object recognized in the image of the first camera, for example, characteristic information, such as shape, color, size, and the like, from the recognition result of the ADAS 210 for objects included in the image acquired by the second camera. In case that the corresponding object is detected, the processor 10 may control the AR module 120 to display an AR image in which an AR object corresponding to the specific object is displayed adjacent to the specific object, and control any one display through the interface unit 110.

Accordingly, in case that the relative position of an object around the vehicle 200 (a reference position of the vehicle 200) changes according to a moving speed of the vehicle 200 or a moving speed of the object, the processor 100 may track the object by interoperation of the plurality of cameras, which acquire images including the object, according to the changed position of the object. The processor 100 may continuously display an AR object corresponding to the tracked object through the images acquired by the interoperated cameras. Accordingly, the user may more easily and intuitively recognize the movement of the object detected in the specific direction of the vehicle 200.

In some embodiments, in case that the specific object is not included in objects included in an image acquired by the second camera, the processor 100 may control the AR module and the interface unit 110 to display an AR image in which an AR object for announcing the appearance of the specific object overlaps the image acquired by the second camera.

For example, in case that the specific object is located in an area outside the field of view of each of the plurality of cameras, i.e., a blind spot, the specific object may not be included in the image acquired by the second camera. In this case, the processor 100 may control the AR module 120 to render an image of the second camera including another AR object (e.g., a second AR object) related to the AR object announcing the appearance of the specific object, i.e., the AR object (e.g., the first AR object) corresponding to the specific object. The processor 100 may control the display unit 250 through the interface unit 110 so that an AR image including the rendered second AR object is displayed on one display.

Here, the processor 100 may control the AR module 120 so that the second AR object overlaps a position corresponding to a direction toward the estimated position of the specific object in a direction opposing the estimated position of the specific object after a certain period of time, that is, a direction facing the estimated position of the specific object, in the image acquired by the second camera. Therefore, the user may effectively recognize in advance the position where the specific object is to appear through the second AR object even before the specific object is included in the image of the second camera.

In case that it is determined that some of characteristic information about the first object identified at a first time point identified by the first camera have changed at a second time point identified by the second camera, the processor 100 may control the AR module 120 so that AR information including the changed characteristic information is displayed on the image of the second camera.

The processor 100 may also control the AR module 120 and the interface unit 110 so that the second AR object is displayed differently depending on a distance between the vehicle 200 and the estimated position of the specific object after the certain period of time. For example, the size of the second AR object may increase or the saturation or brightness of the second AR object may change to indicate the imminent appearance of the specific object.

In some embodiments, the first camera and the second camera may be determined differently depending on a relative position, relative speed, or relative angle of an object. For example, as described above, in case that a specific object is a vehicle in another lane traveling in a direction opposing the vehicle 200 in front of the vehicle 200, the front camera of the vehicle 200 may first recognize the specific object. The processor 100 may estimate the position of the specific object after a certain period of time and determine the rear camera as a camera to subsequently detect the specific object based on the estimated position. Accordingly, the front camera, which is the camera that first recognizes the specific object, may be a first camera, and the rear camera, which is the camera determined based on the estimated position of the specific object, may be a second camera.

In another example, in case that the specific object is a vehicle in another lane traveling in the same direction as the vehicle 200 and overtaking the vehicle 200 from behind the vehicle 200, the rear camera of the vehicle 200 may first recognize the specific object. The processor 100 may estimate the position of the specific object after a certain period of time and determine the front camera as a camera to subsequently detect the specific object based on the estimated position. In this case, the rear camera of the vehicle 200 may be the first camera, and the front camera of the vehicle 200 may be the second camera.

The processor 100 may further display an additional AR object for the recognized specific object based on at least one of the relative speed, relative angle, or relative distance of the recognized specific object. For example, in case that a distance between the recognized specific object and the vehicle 200 is less than a certain distance, the processor 100 may control the AR module 120 to render an AR image in which an AR object indicating the approach of the specific object further overlaps an image of a camera including the specific object.

In some embodiments, additional AR objects may further be displayed depending on the driving status of the vehicle 200 or the operating status of the vehicle 200. For example, in case that a signal light of the vehicle 200 is turned on for a lane change, the processor 100 may control the AR module 120 and the interface unit 110 to display an AR object indicating whether a lane to change is safe based on objects detected from a lane corresponding to the turned-on signal light.

For example, the processor 100 may determine whether a lane change is safe based on a distance between the vehicle 200 and an object detected from the lane corresponding to the signal light, that is, another vehicle and a speed of the another vehicle.

For example, in case that the speed of the another vehicle is below a certain speed and the distance between the vehicle 200 and the another vehicle exceeds a preset safe distance, the processor 100 may control the AR module 120 to display an AR object indicating that a safe lane change is possible. In another example, in case that the speed of the another vehicle in the lane corresponding to the signal light or a relative speed of the another vehicle is at least the certain speed, or the distance between the another vehicle and the vehicle 200 is below the preset distance, the processor 100 may control the AR module 120 to display an AR object indicating that the lane change is dangerous. In this case, the AR object indicating that the safe lane change is possible and the AR object indicating that the lane change is dangerous may be different from each other.

The AR information providing device according to an embodiment may further include a communication unit 140. The communication unit 140 may connect wireless communication with a preset server, for example, a cloud server, under the control of the processor 100, and may receive information, for example, POI information and AR content, from the connected cloud server, in response to a request from the processor 100.

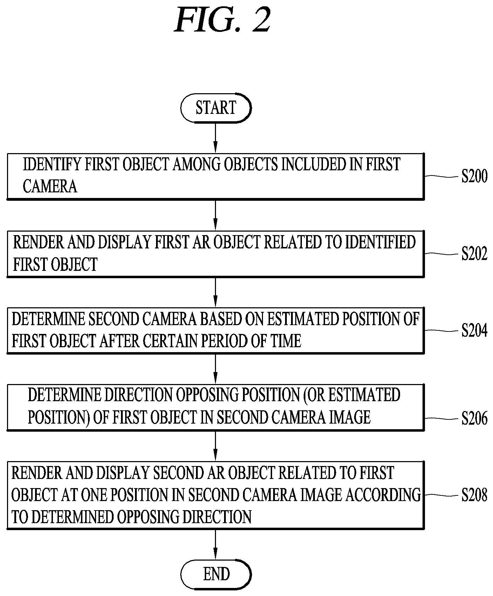

FIG. 2 is a flowchart of an operation process in which an AR information providing device according to an embodiment displays an AR object related to an object recognized by a first camera on an image captured by a second camera.

Referring to FIG. 2, the processor 100 of the AR information providing device according to an embodiment may first identify objects included in an image acquired through the first camera (an image of the first camera). Accordingly, a first object among the objects included in the image of the first camera may be identified (S200). The ADAS 210 may acquire information about which camera has acquired the image including the first object. The camera information acquired by the ADAS 210 may be information about the first camera.

Here, the first object may be an object selected automatically according to preset conditions or selected by a user. For example, the preset conditions may include at least one of a distance from the vehicle 200 or a relative speed and a relative angle from the vehicle 200. For example, a vehicle traveling at a speed which is a certain level faster than the speed of the vehicle 200 may be automatically selected as the first object. Alternatively, a vehicle whose distance from the vehicle 200 is less than a certain level may be automatically selected as the first object. Alternatively, a building, in which a sales office providing services corresponding to an industry preset by the user is located, may be automatically selected as the first object.

In step S200, the processor 100 may collect various information obtained from the first object as characteristic information about the first object. For example, in case that the first object is a vehicle, the processor 100 may collect feature points, such as the shape, for example, the size of the vehicle, the position of a license plate, the position of an exhaust port, the shape of a bumper, and the color of the vehicle, as characteristic information about the first object. Or, in case that the first object is a building, the shape of the building and its surrounding (e.g., a window pattern), the position and color of the building, the letters or images included in a sign, the shape or size of the sign, and the like may be collected as the characteristic information about the first object.

The processor 100 may control the AR module 120 to render an AR image (a first AR image) that an AR object corresponding to the first object, for which the characteristic information has been collected, i.e., the identified first object, is included in the image acquired by the first camera. The processor 100 may control the interface unit 110 so that the rendered AR image is displayed on one of the displays included in the display unit 250 (S202).

For example, in case that the first camera is the front camera, the AR image including the AR object (the first AR object) corresponding to the first object may be displayed on the CID 251. Alternatively, in case that the first camera is the rear camera, the AR image including the first AR object may be displayed on the room mirror display 252.

In some embodiments, in a state where the AR image including the AR object of the first object is displayed on at least one of the displays, the processor 100 may estimate the position of the first object after a certain period of time has elapsed from a reference time point. The processor 100 may determine at least one camera, which is likely to acquire an image including the first object based on the estimated position of the first object, among the cameras of the vehicle 200, as a second camera (S204).

Here, the reference time point may be determined according to the first object. For example, the reference time point may be a time point at which the first object has been identified. Alternatively, the reference time point may be a time point at which the first object has disappeared from the image of the first camera. In this case, the processor 100 may continuously monitor whether the first object is included in the image acquired by the first camera.

Therefore, the processor 100 may determine, in step S204, a time point, at which at least a portion of the first object is not displayed on the image acquired by the first camera due to movement of the vehicle 200 or movement of the first object, as the reference time point. The processor 100 may also calculate at least one estimated position of the first object after the certain period of time has elapsed from the reference time point.

Here, the estimated position of the first object may be calculated based on an estimated position on a reference coordinate system that the position of the first object detected in the image of the first camera, i.e., the position on a first camera image coordinate system, to a position on the reference coordinate system. In this case, the processor 100 may control the ADAS 210 to convert first object coordinates on the first camera image coordinate system into coordinates on the reference coordinate system.

Here, the reference coordinate system is a coordinate system in which a point where a foot of perpendicular is lowered on the ground based on a rear wheel axle of the vehicle 200 is the origin, and may be a coordinate system that has a traveling direction of the vehicle 200, i.e., the front, as an X-axis component having a positive (+) value, the rear of the vehicle as an X-axis component having a negative (-) value, and the left and right sides of the vehicle 200 as a Y-axis. Both the first camera image coordinate system and the reference coordinate system may be three-dimensional coordinate systems. Therefore, the coordinates of the first object on the first camera image coordinate system and the reference coordinate system may all be three-dimensional coordinates indicating a three-dimensional position of the first object.

The processor 100 may calculate the estimated position of the first object after the certain period of time based on the coordinates of the first object on the reference coordinate system, the speed and traveling direction of the vehicle 200, and the speed and traveling direction of the first object. The processor 100 may determine at least one camera different from the first camera as a second camera based on the calculated estimated position of the first object.

Here, the second camera may be a camera that the estimated position of the first object after the certain period of time is inside a field of view thereof. For example, at least one camera which acquires an image in a direction toward the estimated position of the first object after the certain period of time has elapsed may be determined as the second camera.

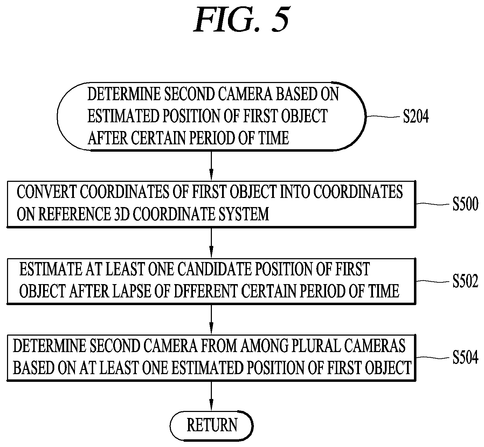

Hereinafter, the step S204 of FIG. 2 of determining at least one second camera based on the estimated position of the first object after the certain period of time will be described in more detail with reference to FIG. 5.

In some embodiments, in case that the at least one second camera is determined in step S204, the processor 100 may determine a direction opposing the position of the first object or the calculated estimated position of the first object for each of the at least one second camera (S206). For example, in case that the first object does not disappear from the image of the first camera, the direction opposing the first object may be a direction opposing the first object according to the reference coordinate system, for example, a direction toward the position of the first object. However, in case that the first object has disappeared from the image of the first camera, the direction opposing the first object may be the direction opposing the estimated position of the first object, that is, the direction toward the estimated position of the first object.

The processor 100 may determine a position corresponding to the determined direction opposing the first object in the image acquired by the second camera. Here, the processor 100 may determine the position corresponding to the determined direction opposing the first object in a display area, displayed on the display, of the image acquired by the second camera.

The processor 100 may control the AR module 120 to render an AR image in which an AR object related to the first object is displayed at a position corresponding to the determined direction opposing the first object based on the image of the second camera (S208).

Here, the AR object related to the first object may be the first AR object. Or the AR object related to the first object may be a second AR object different from the first AR object.

For example, in case that the first object is included in the image acquired by the second camera, an area where the first object is displayed may be a position corresponding to the direction opposing the first object. The processor 100 may then control the AR module 120 to render an AR image that the first AR object overlaps around an area, in which the first object is displayed, of the image acquired by the second camera. The processor 100 may control the interface unit 110 so that the AR image (the second AR image) including the first AR object is displayed on at least one display according to the user's selection.

Here, the display on which the first AR image, i.e., the AR image based on the image of the first camera, is displayed may be different from the display on which the second AR image, i.e., the AR image based on the image of the second camera, is displayed. For example, in case that the first AR image is displayed on the CID 251, the second AR image may be displayed on the room mirror display 252. In another example, in case that the first AR image is displayed on the room mirror display 252, the second AR image may be displayed on the CID 251.

Alternatively, the first AR image and the second AR image may be displayed on one display. In this case, the processor 100 may segment the display area of the one display such that the first AR image and the second AR image are displayed in different areas.

In some embodiments, in case that the first object is not included in the image acquired by the second camera, that is, the first object is located in a blind spot between the first camera and the second camera, the position corresponding to the direction opposing the first object may be a position on a virtual extension line connecting the estimated position of the first object from the field of view (FOV) of the second camera in the image of the second camera. In this case, the position corresponding to the direction opposing the first object may be a position in the display area, displayed on the display, of the image of the second camera, which is adjacent to an intersection between an edge of the display area and the virtual extension line.

The processor 100 may display an AR object related to the first object at the position corresponding to the determined direction opposing the first object in the image of the second camera. In this case, the AR object related to the first object may be an AR object for announcing the appearance of the first object. In this case, the AR object for announcing the appearance of the first object may be an AR object (hereinafter, referred to as a second AR object) different from the first AR object.

The processor 100 may control the AR module 120 to render an AR image in which the second AR object overlaps a position corresponding to the determined direction opposing the first object on the image acquired by the second camera. The processor 100 may control the interface unit 110 to display the second AR image including the second AR object on at least one display according to the user's selection.

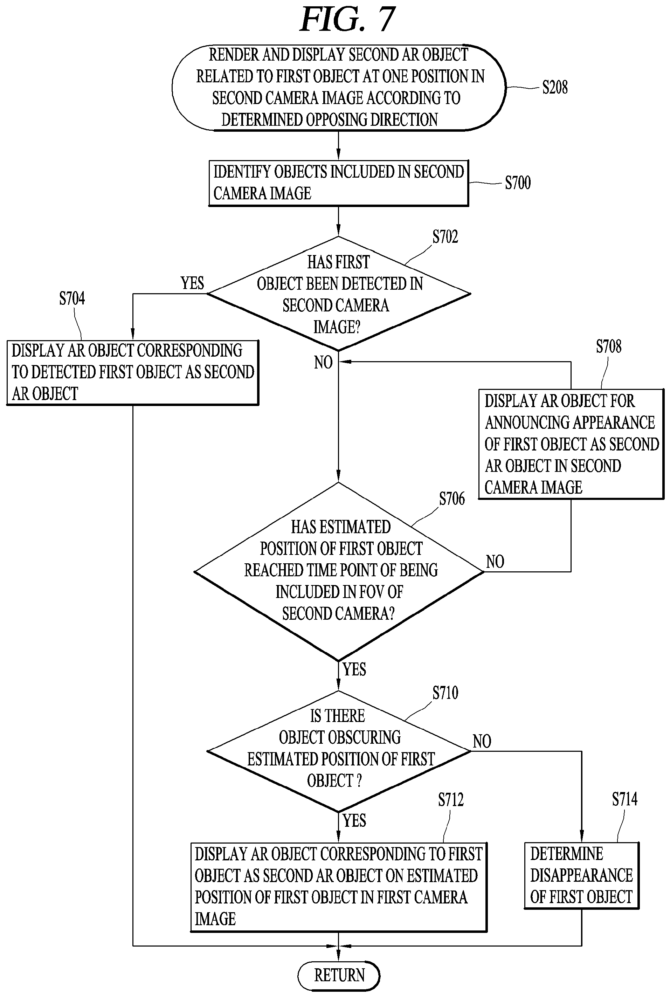

Hereinafter, the operation process of the processor 100 that controls the AR module 120 and the interface unit 110 to display the second AR image including the AR object related to the first object on the display in step S208 will be described in more detail with reference to FIG. 7.

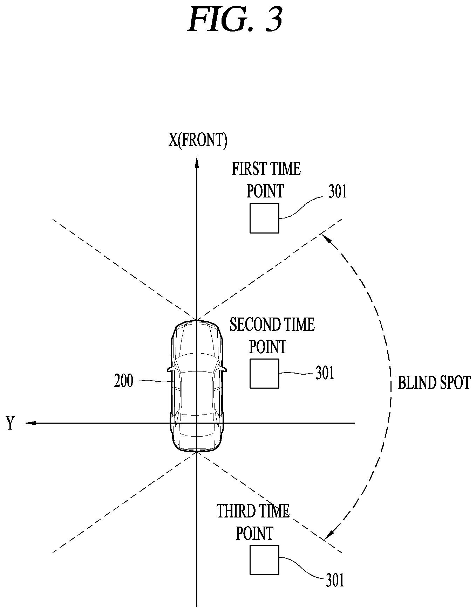

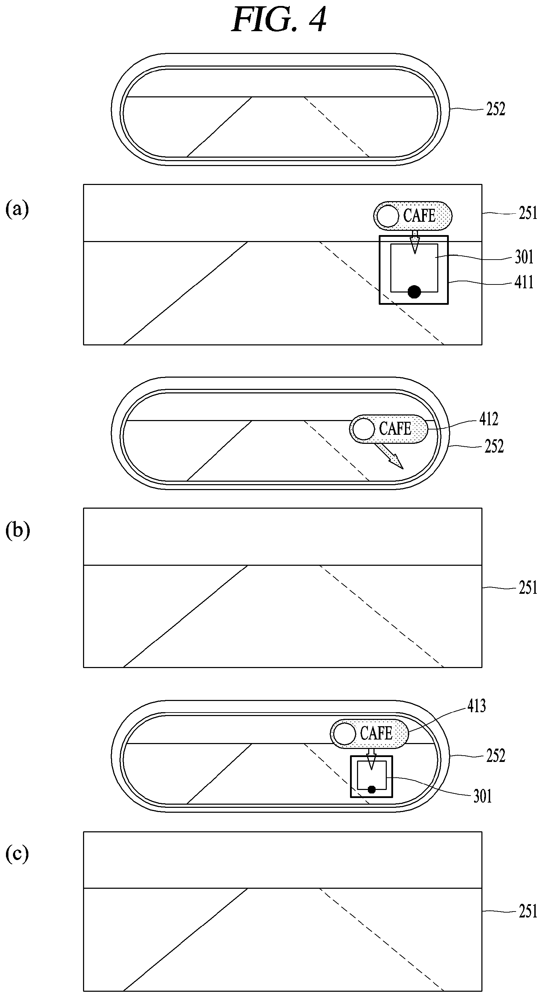

FIGS. 3 and 4 illustrate an example in which the second AR object, which announces the appearance of the first object, is displayed as an AR object related to the first object, as described above.

FIG. 3 is a diagram of an example in which a surrounding object (a first object) moves relative to movement of a vehicle, in which the AR information providing device according to an embodiment is mounted. FIG. 4 assumes an example in which an AR image according to an image acquired by the front camera of the vehicle 200 is displayed on the CID 251 and an AR image according to an image acquired by the rear camera of the vehicle 200 is displayed on the room mirror display 252.

First, referring to FIG. 3, in case that the vehicle 200 moves forward, a first object 301 detected on the right side of the vehicle 200 may move according to a speed of the vehicle 200 or a speed of the first object 301. In this case, in case that the first object 301 is a vehicle moving in an opposite direction to the vehicle 200, the first object 301 may relatively move in a direction opposite to the moving direction of the vehicle 200 at a speed that is the sum of the moving speed of the first object 301 and the moving speed of the vehicle 200. Or, in case that the first object 301 is a building that cannot move on its own, the first object 301 may relatively move in the opposite direction to the moving direction of the vehicle 200 depending on the moving speed of the vehicle 200. Therefore, as illustrated in FIG. 3, the first object 301 may move from a position of a first time point (point in time) to a position of a third time point.

In some embodiments, in case that the first object 301 is located at a position corresponding to the first time point, the first object may be located in front of the vehicle 200, so the first object 301 may be included in the image acquired by the front camera of the vehicle 200. In this case, the processor 100 may identify the first object based on the image acquired by the front camera. Accordingly, as illustrated in FIG. 4, in case of displaying the image acquired by the front camera of the vehicle on the CID 251, the processor 100 may control the AR module 120 to display a first AR image including a first AR object 411 related to the first object on the CID 251, as illustrated in (a) of FIG. 4, based on a result of identifying the first object 301.

In this state, the first object 301 may move to a position corresponding to a second time point according to the movement of the vehicle 200 or the first object 301 or the movements of both the vehicle 200 and the first object 301. In this case, the first object may not be detected by the front camera and the rear camera because the first object 301 is located in a blind spot between the front camera and the rear camera.

In this way, in case that the first object 301 disappears from the image of the front camera, i.e., the first camera by which the first object 301 has first been detected, the processor 100 may estimate the position of the first object 301 after a certain period of time. To this end, the processor 100 may estimate the position of the first object 301 by considering the coordinates of the first object 301 according to the reference coordinate system calculated through the ADAS 210 at the reference time point, and the relative speed, relative distance, and relative angle of the first object 301 based on the vehicle 200.

As a result of the estimation, as illustrated in FIG. 3, the processor 100 may determine the rear camera, which acquires an image of the rear of the vehicle, as a second camera because the first object 301 moves from the position of the first time point to the position of a third time point according to the movement of at least one of the vehicle 200 and the first object 301.

As described in step S208 of FIG. 2, the processor 100 may determine a position corresponding to the direction opposing to the first object and control the AR module 120 to render a second AR image that a second AR object 412 for announcing the appearance of the first object 301 is included in the image acquired by the second camera. The processor 100 may control the interface unit 110 to display the second AR image on a display, i.e., the room mirror display 252, on which the image acquired by the second camera is displayed.

Accordingly, as illustrated in (b) of FIG. 4, as the first object 301 is located in the blind spot, the first object may not be found by any of the first camera as the front camera or the second camera as the rear camera. However, the processor 100 may determine the position corresponding to the direction opposing the first object in the display area, which is displayed on the display (the room mirror display 252), of the image of the second camera (the rear camera), based on the estimated position of the first object 301 after the certain period of time has elapsed. The processor 100 may display the second AR object 412 for announcing the appearance of the first object 301, at the determined position on the display where the image of the second camera is displayed. Accordingly, as illustrated in (b) of FIG. 4, the second AR object 412 that announces the appearance of the first object 301 may be displayed on the lower right end of the room mirror display 252, on which the image acquired by the rear camera is displayed.

In some embodiments, the first object 301 may move to a position corresponding to a third time point according to the movement of the vehicle 200 or the first object 301 or the movements of both the vehicle 200 and the first object 301. In this case, the first object 301 may be included in the image acquired by the rear camera because the first object 301 is located behind the vehicle 200.

Accordingly, the processor 100 may display the AR object related to the first object 301, i.e., the first AR object 411, around the first object 301 displayed on the image of the rear camera. For example, as the first object 301 is included in the image of the rear camera, the second AR object 412 may disappear and the first AR object 411 may be displayed.

The first AR object 411 of the first object 301 displayed on the image of the first camera may be seamlessly displayed on an image of another camera according to the movement of the vehicle 200 or the first object 301.

Accordingly, even though the vehicle 200 passes a specific POI, information about the passed POI may be confirmed and selected through the AR object displayed on the image of the another camera (the second camera). As described above, the processor 100 may provide POI information about the first object 301 by linking a plurality of different cameras by which the first object 301 is found, thereby providing more improved navigation information.

Further, the AR information providing device according to an embodiment may provide information related to a position of an identified object through an AR object (a second AR object) displayed on an image of at least one camera when the identified object enters a blind spot. Therefore, even though an object does not appear in a camera image due to being located in the blind spot, the presence and position of the object may be recognized by the user through the AR object.

In some embodiments, the processor 100 may calculate an estimated position of the first object and determine a second camera based on the calculated estimated position.

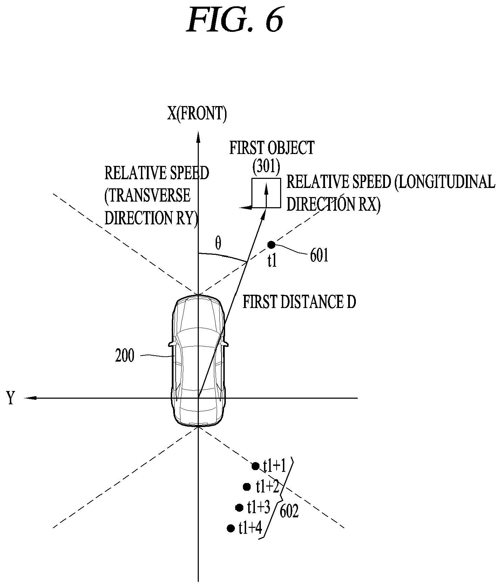

FIG. 5 is a flowchart of an operation process in which the AR information providing device according to an embodiment determines a second camera among a plurality of cameras based on an estimated position of a first object after a certain period of time. FIG. 6 is a view of an example in which the at least one estimated position of the first object has been calculated.

Referring to FIG. 5, the processor 100 of the AR information providing device according to an embodiment may convert coordinates of a first object identified from an image of a first camera into coordinates on a reference coordinate system in case that an AR image including an AR object (a first AR object) of the first object is displayed on a display (S500).

First, the ADAS 210 may calculate initial coordinates of the first object in case that the first object is identified. In this case, the initial coordinates of the first object may be coordinates calculated according to an image coordinate system of the first camera including the first object. The processor 100 may control the ADAS 210 to convert the initial coordinates of the first object, which are based on the image coordinate system of the first camera, into coordinates on the reference coordinate system.

For the conversion into the coordinates on the reference coordinate system, the processor 100 may use first camera calibration data. The first camera calibration data may be information, which includes a position (X, Y, Z) and orientation direction (roll, pitch, yaw) of the first camera, the field of view of the first camera, and frame per second (FPS) information based on the origin of the reference coordinate system, and may be data for converting the coordinates on the first camera image coordinate system into the coordinates on the reference coordinate system. The first camera calibration data may be data previously stored in the memory 130.

The ADAS 210 may obtain vehicle position information including the moving speed and position of the vehicle 200, and a traveling azimuth (heading angle) under the control of the processor 100. The ADAS 210 may calculate a relative distance, relative angle, and relative speed between the first object and the vehicle 200, on the basis of the acquired vehicle position information and three-dimensional position information about the first object.

For example, the processor 100 may calculate a distance D (a relative distance) from the origin (0, 0) of the reference coordinate system to the first object according to the following Equation 1, on the basis of movement distance S = speed V * time T in case that the converted coordinates of the first object 301 is (x1, y1) on the reference coordinate system.

$$【Equation 1】$$
$$D = \sqrt{x1^2 + y1^2}$$

The processor 100 may calculate an angle θ (yaw) (a relative angle) of the first object from the origin (0, 0) of the reference coordinate system according to the following Equation 2.

$$【Equation 2】$$
$$\theta = \arctan\left(\frac{x1}{y1}\right)$$

The processor 100 may estimate at least one position of the first object at a time point after a certain period of time has elapsed from the reference time point based on the relative distance, relative angle, and relative speed with respect to the first object calculated by the ADAS 210 (S502).

For example, as illustrated in FIG. 6, in case that a time point at which the first object 301 disappears from the first camera is referred to as a reference time point t1 (601), the reference time point t1 (601) may be a time point at which the relative distance D decreases below a preset distance and accordingly the relative angle θ deviates from a preset range.

In this case, in case that a longitudinal relative speed and a transverse relative speed detected from the first object 301 are Rx and Ry, respectively, an estimated position (x2, y2) of the first object 301 at a time point t2 after a certain period of time has elapsed from the reference time point t1 (601) may be calculated according to the following Equation 3.

**【Equation 3】**

$$\begin{bmatrix} x2 \\ y2 \end{bmatrix} = \begin{bmatrix} Rx & 0 \\ 0 & Ry \end{bmatrix} \begin{bmatrix} x1 \\ y1 \end{bmatrix} (t2 - t1), \, t2 > t1$$

Here, (x2, y2) denotes the estimated coordinates of the first object at a time point t2 after a certain time has elapsed from the reference time point t1, (x1, y1) denotes the coordinates of the first object at the reference time point t1, Rx denotes the longitudinal relative speed of the first object, and Ry denotes the transverse relative speed of the first object.

Here, the time point t2 (hereinafter, referred to as a second time point) after the certain period of time has elapsed may be a time point that monotonically increases from the reference time point t1 (601). That is, t2 = t1 + n, n = {1, 2, 3, 4, ...}. Therefore, a plurality of time points t2, different from one another, after the certain period of time has elapsed may be calculated by uniformly increasing the integer n in a manner of sequentially adding a preset unit time. In this case, as the second time point t2 increases, the distance x2 on the x-axis coordinate and the distance y2 on the y-axis coordinate from the origin (0,0) of the reference coordinate system may increase, so that a plurality of different estimated positions 602 of the first object may be estimated, as illustrated in FIG. 6.

The processor 100 may determine a second camera, from among a plurality of cameras arranged in the vehicle 200, based on the at least one estimated position 602 of the first object (S604). For example, the processor 100 may determine, as the second camera, any one camera whose field of view is set to capture an image of an area, in which the estimated positions of the first object corresponding respectively to the plurality of time points t2 after the certain period of time has elapsed, are distributed. For example, as illustrated in FIG. 6, in case that the plurality of estimated positions 602 of the first object are distributed in the field of view of the rear camera, the processor 100 may determine the rear camera as the second camera.

In the previous description, the example of calculating the estimated position of the first object after the certain period of time has elapsed, based on the relative speed, relative distance, and relative angle estimated by the ADAS 210 has been described, but of course, the position of the first object may also be estimated based on position information related to the vehicle 200 and the first object.

For example, the processor 100 may estimate a GPS position of the vehicle 200 at the second time point after the certain period of time has elapsed from the reference time point (e.g., t1 (601)) based on the traveling speed, GPS position, and progressing azimuth of the vehicle 200. The processor 100 may also estimate a relative movement position of the first object on the vehicle reference coordinate system based on the estimated GPS position.

FIG. 7 is a flowchart of an operation process in which the AR information providing device according to an embodiment displays an AR object related to a first object recognized in an image captured by the first camera on an image captured by the second camera.

In case of displaying the AR object in step S208 of FIG. 2, the processor 100 of the AR information providing device according to an embodiment may first identify objects included in an image acquired by the second camera (S700). The processor 100 may detect, based on a result of the identification, whether a first object is included in the image acquired by the second camera (S700).

As described above, the ADAS 210 may identify the first object on the basis of morphological features, such as a size, a shape, and a color, detected from the first object in case of identifying the first object in the image of the first camera, as described in step S200 of FIG. 2. The features used to identify the first object may be stored as feature information related to the first object. For example, in case that the first object is a vehicle, the processor 100 may collect feature points, such as the shape, for example, the size of the vehicle, the position of a license plate, the position of an exhaust port, the shape of a bumper, and the color of the vehicle, as feature information about the first object. Or, in case that the first object is a building, the shape of the building and its surrounding, the position and color of the building, the letters or images included in a sign, the shape or size of the sign, and the like may be collected as the feature information about the first object.

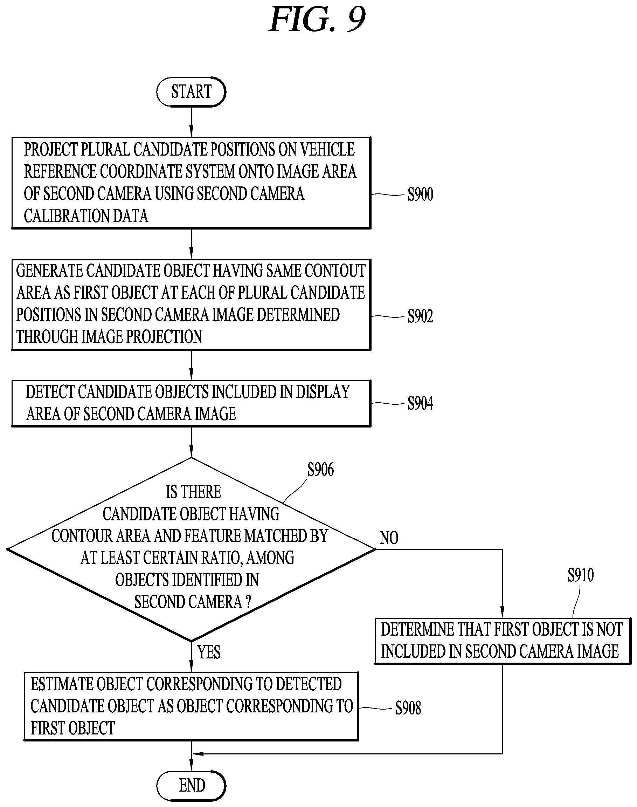

The collected and stored feature information about the first object may be used to detect an object corresponding to the first object from an image acquired by the second camera. For example, in case that the first object is a building, the processor 100 may detect an object corresponding to the collected and stored feature information from objects corresponding to the 'building', among objects detected by the second camera. In case that the first object is a 'vehicle', the processor 100 may determine an object, which includes features most similar to the morphological features of the identified first object, such as the size and color included in the feature information of the first object, as the first object. Alternatively, the processor 100 may further utilize a plurality of estimated positions of the first object to more improve detection accuracy and detection speed of an object corresponding to the first object. For example, the processor 100 may generate virtual objects corresponding to feature points of the first object at the estimated plurality of estimated positions of the first object, and may detect an object corresponding to the first object from an image of the second camera based on the generated virtual objects. Hereinafter, the operation process of the processor 100 will be described in more detail with reference to FIG. 9.

In case that at least a portion of the object corresponding to the first object is included in the image acquired by the second camera according to the detection result of step S702, the processor 100 may determine that the object corresponding to the first object is included in the image acquired by the second camera. Accordingly, the processor 100 may control the AR module 120 and the interface unit 110, such that an AR image (a second AR image), in which a first AR object related to the first object is displayed, is displayed around an area, in which the object corresponding to the first object is displayed, of the image of the second camera (S704). In some embodiments, in case that the first object is not detected in the image of the second camera as a result of the detection in step S702, the processor 100 may check whether the estimated position of the first object has reached a time point at which the same is included in the field of view of the second camera (S706). In case that the estimated position of the first object has reached the time point at which the same is included in the field of view of the second camera according to the check result of step S706, the processor 100 may determine that the first object is in a blind spot located between the field of view of the second camera and the field of view of the first camera.

Therefore, the processor 100 may determine a direction opposing the estimated position of the first object in the image acquired by the second camera. The processor 100 may control the AR module 120 to render an AR image, in which another AR object, namely, a second AR object, related to the first object is displayed, according to the determined direction (S708). Here, the second AR object may be an AR object that announces the appearance of the first object, and may be a different object from the first AR object.

Here, a position in the direction opposing the position of the first object may be a position determined based on a virtual line connecting an image reference point of the second camera to the estimated position of the first object. For example, the processor 100 may generate a virtual extension line connecting an FOV center of the second camera to the estimated position of the first object, determine an intersection between the virtual extension line and an edge of a display area, which is displayed on a display, of the image of the second camera, as a position in the direction opposing the position of the first object, and display the second AR object around the determined position. In this case, the second AR object may be, of course, displayed in the display area of the image of the second camera.

In some embodiments, in case that the estimated position of the first object has reached the time point at which the same is included in the FOV of the second camera according to the check result in step S706, the processor 100 may check whether the object corresponding to the first object has been obscured based on the estimated position of the first object, that is, the estimated position of the first object, which is estimated to be included within the FOV of the second camera (S710).

For example, the processor 100 may detect whether there is another object displayed in an area, which corresponds to the estimated position of the first object, of the image acquired by the second camera. In case that there is another object displayed in the area of the second camera corresponding to the estimated position of the first object, the processor 100 may determine that the first object has been obscured by the displayed another object (hereinafter, referred to as an obscuring object). The processor 100 may control the AR module 120 to display an AR image, in which an AR object corresponding to the first object, for example, the first AR object is displayed, in the area where the obscuring object is displayed, thereby indicating that the first object is located in the area obscured by the obscuring object (S712).

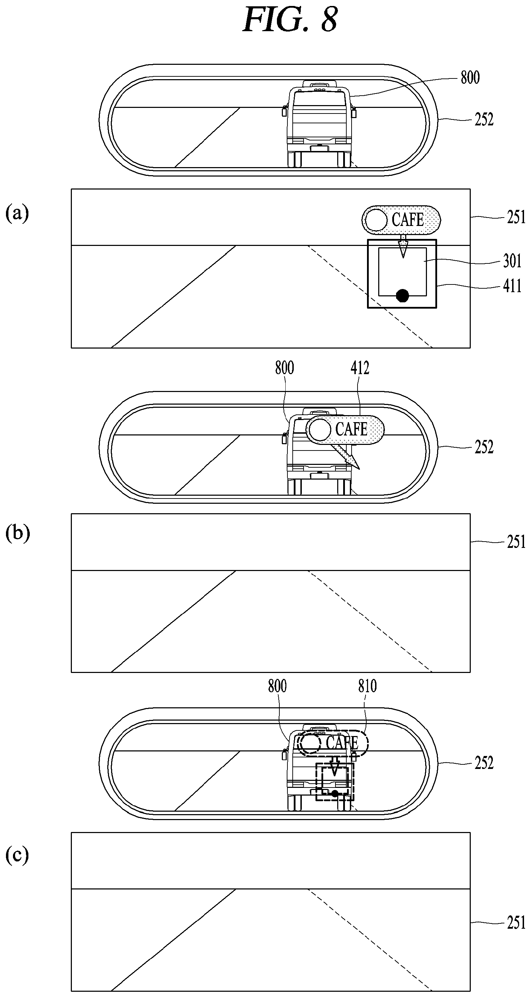

Hereinafter, an example of an AR image in which the first AR object corresponding to the first object is displayed in the area obscured by the obscuring object will be described with reference to FIG. 8.

However, the processor 100 may determine that there is no obscuring object in case that there is not another object displayed in the area, which corresponds to the estimated position of the first object, of the image acquired by the second camera, as the check result in step S710. The processor 100 may determine that the first object has disappeared as the first object is no longer detected in the image of the second camera.

In some embodiments, the second camera may be determined as a plurality of cameras, of course. In such a case, the process described in FIG. 7 may be performed separately for each second camera. For example, in the description of FIG. 6 above, the processor 100 may determine at least one camera as the second camera according to the distribution status of the plurality of estimated positions 602 of the first object.

For example, as illustrated in FIG. 6, in case that the plurality of estimated positions 602 of the first object are distributed on a right rear side of the vehicle 200, the processor 100 may determine the rear camera as the second camera as described above. The processor 100 may determine a camera, which corresponds to a right side digital mirror that senses an image of the rear area of the vehicle 200 from the right side of the vehicle 200, as the second camera. For example, the rear camera and the camera corresponding to the right side digital mirror may all be determined as the second cameras.

Or, in case that the first camera is the front camera, the rear camera and a left digital side mirror camera may all be the second cameras. In this case, even though a first object, for example, a vehicle in a different lane from the vehicle 200 is located in a blind spot between the front camera and the rear camera, the first object may be detected in the left digital side mirror camera. In this case, an AR object (the second AR object) that announces the appearance of the first object may be displayed on the display that displays an image of the rear camera according to the operation process of FIG. 7, while a first AR object including AR information related to the first object may be displayed on an image of the left digital side mirror camera according to the detection of the first object.

In some embodiments, in case that at least one second camera is determined in this way, the processor 100 may perform the operation process of FIG. 7 for each second camera. Therefore, for each second camera, a position toward the estimated position of the first object may be determined, and a different AR image may be rendered in which the AR object is displayed at the determined position. The different rendered AR images may be displayed on at least one display according to the user's selection.

In some embodiments, in case that the first object is movable, for example, is a vehicle, the first object may be moved irregularly in an unexpected direction or at an unexpected speed by the processor 100. In case that the irregular movement of the first object occurs, the position of the first object after a lapse of a certain period of time may deviate from the FOV of the currently determined second camera.

To detect the first object during the irregular movement of the first object, in case that the first object is not detected in step S702, the processor 100 may check whether the first object is included in an image acquired by another camera other than the currently determined second camera.

Accordingly, in case that the image acquired by the second camera does not include at least a portion of an object corresponding to the first object, the processor 100 may check whether the detection of the object corresponding to the first object has been attempted for each of the images acquired by all cameras arranged in the vehicle 200.

In case that an object corresponding to the first object is not detected from the images acquired by all cameras, the processor 100 may change any one camera, except for the currently determined second camera, to the second camera. Then, the processor 10 may go to step S700 to identify objects included in an image acquired by the changed second camera, and go to step S702 to detect whether an object corresponding to the first object is included in the identified objects.

In case that the object corresponding to the first object is included in the image acquired by the changed second image, the processor 100 may go to step S704 to control the AR module 120 and the interface unit 110 to display an AR image (a second AR image), in which a first AR object related to the first object is displayed, around an area, in which the object corresponding to the first object is displayed, of the image of the changed second camera.

In another example, in case that the object corresponding to the first object is not detected in the images of all cameras, the processor 100 may determine that the first object is located in a blind spot. Accordingly, the processor 100 may restore the second camera back to the second camera that has initially been determined for the first object, and go to step S710 of FIG. 7 to check whether there is an obscuring object that obscures the first object in the image of the restored second camera.

In some embodiments, as described above, FIG. 8 is a diagram of an example in which the AR information providing device according to an embodiment displays a position of the first object obscured by an obstacle through an AR object, in step S712.

First, (a) of FIG. 8 illustrates an example in which an image acquired by the front camera of the vehicle 200 is displayed on the CID 251, and an image acquired by the rear camera of the vehicle 200 is displayed on the room mirror display 252. In this case, the AR module 120 may identify an object (a first object) 301 recognized by the front camera and display an AR object (a first AR object) 411 related to the identified first object 301 on the CID 251. In this case, the front camera may be a first camera.

In this case, the processor 100 may detect the user's selection of the first object 301 displayed on the CID 251. For example, the processor 100 may detect a touch input to a first AR object 411 displayed on the CID 251, a movement of the user's eyes gazing at the first AR object 411, or a user's gesture (e.g., pointing with the user's finger) for selecting the first AR object 411. Or, the processor 100 may detect a user's voice command to select the first object 301.

Then, the processor 100 may provide information related to the first object 301 in the form of AR content according to the detected user's selection. For example, the process 100 may display information about services (e.g., menu information) that may be provided by the first object 301 or contact information about the first object 301 around the identified first object 301 in the form of AR content (hereinafter, referred to as AR information). In case that any AR information is selected by the user, the processor 100 may provide a service according to the selected AR information, for example, a service like a menu selection or a call connection to the first object 301.

In some embodiments, in case that the first object 301 is identified by the first camera, the processor 100 may estimate a position of the first object 301 after a certain period of time has elapsed from a reference time point (e.g., t1 (601)) depending on whether the first object 301 has reached the reference time point. The processor 100 may determine, based on the estimated position, a camera in which the first object 301 is likely to appear, for example, a camera with a FOV including the estimated position of the first object 301, as the second camera. In this case, the second camera may be the rear camera.

In the state where the identified AR object is displayed on the image acquired by the first camera, the first object 301 may deviate from the FOV of the first camera as the vehicle 200 moves. For example, in case that the first object 301 deviates from the time point t1 (601) of FIG. 6 due to the movement of the vehicle 200, the first object 301 may be located in a blind spot between the front camera and the rear camera, like the position at the second time point of FIG. 3. In this case, the first object 301 may be displayed neither on the CID 251 where the image acquired by the first camera (the front camera) is displayed, nor on the room mirror display 252 where the image acquired by the rear camera is displayed.

In some embodiments, in case that the first camera is the front camera and the second camera is the rear camera, the processor 100 may check, as described in step S706 of FIG. 7, whether the estimated position of the first object 301 has reached the time point at which the same is included in the FOV position of the second camera. In case that the estimated position of the first object 301 has reached the time point at which the same is included in the FOV position of the second camera according to the check result, the processor 100 may control the AR module 120 to display an image of the second camera including an AR object for announcing the appearance of the first object, i.e., the second AR object, as described in step S708 of FIG. 7.

To this end, the processor 100 may determine a direction opposing the estimated position of the first object on the room mirror display 252 where the image captured by the second camera is displayed. The processor 100 may control the AR module 120 so that a second AR object oriented in the determined direction is displayed to overlap the display on which the image of the second camera is displayed, i.e., the room mirror display 252. Accordingly, as illustrated in (b) of FIG. 8, the second AR object 412 may be displayed at a position on the room mirror display 252 corresponding to the direction in which the first object 301 is to appear.

In some embodiments, in case that the estimated position of the first object 301 has reached the time point at which the same is included in the FOV position of the second camera, the processor 100 may determine whether another object obscuring the first object 301 is included in the image of the second camera, as described in step S710 of FIG. 7. Accordingly, as illustrated in (c) of FIG. 8, in case that the shape of another vehicle 800 traveling behind the vehicle 200 at the rear of the vehicle 200 overlaps the estimated position of the first object 301, the processor 100 may determine that the another vehicle 800 is an obscuring object obscuring the first object 301. Then, as illustrated in (c) of FIG. 8, the processor 100 may display an AR object corresponding to the first object 301, i.e., a first AR object 810, to overlap the obscuring object, i.e., the another object 800 included in the image of the second camera.

Accordingly, the processor 100 may display the AR object corresponding to the first object 301 to be recognized by the user even though another object included in the image of the second camera obscures the first object 301.

In case that the first AR object is displayed in this manner, the processor 100 may provide AR information about the first object 301 on the basis of a user's input with respect to the first AR object. Accordingly, even though the user cannot recognize the first object 301 in the image of the first camera, the user may recognize the first object 301 through the image of the second camera and receive the AR information related to the first object 301. Even in case that the first object 301 is obscured by another object, the AR object related to the first object 301 may be displayed to provide the user with the AR information related to the first object 301 regardless of whether the first object 301 is obscured.

In some embodiments, with respect to a display on which an image acquired by a camera is displayed, i.e., a display on which an image received from a camera playing a role of a digital mirror is displayed, the processor 100 may display an image acquired by the camera according to the user's input applied. For example, the processor 100 may enlarge (zoom in) or reduce (zoom out) an image of a specific camera displayed on the display based on the user's multi-touch input. Alternatively, the processor 100 may zoom in or zoom out the camera image based on a position where a touch is applied to a position on the display on which the camera image is displayed. For example, a reference point for zooming in or out the image may change based on the touch position.

In some embodiments, even with respect to the same object, the shape of the object identified in the first camera and the shape of the object identified in the second camera may be different from each other. For example, in case that the front camera and the rear camera are the first and second cameras, respectively, the first camera may include a frontal shape of the first object, while the second camera may include a rear image of the first object. Accordingly, in case of identifying the first object, the AR information providing device according to an embodiment may detect feature points of the identified first object, and detect an object, which has the most similar features from an image of another camera based on the detected feature points, as an object corresponding to the first object.

For example, in case that the first object is a vehicle, the processor 100 may collect feature points, such as the shape, for example, the size of the vehicle, the position of a license plate, the position of an exhaust port, the shape of a bumper, and the color of the vehicle, as feature information about the first object. Or, in case that the first object is a building, the shape of the building and its surrounding (e.g., a window pattern), the position and color of the building, the letters or images included in a sign, the shape or size of the sign, and the like may be collected as the feature information about the first object.

In some embodiments, the processor 100 may determine an object, which is determined to have a high similarity to the collected feature information about the first object, as an object corresponding to the first object, for example, an object viewed at the field of view of the second camera, among objects included in the image of the second camera.

To this end, the processor 100 may project a contour area obtained from the identification result of the first object onto each of a plurality of estimated positions of the first object, and detect an object in the image of the second camera corresponding to the first object based on whether a contour area of the object matches the projected contour areas.

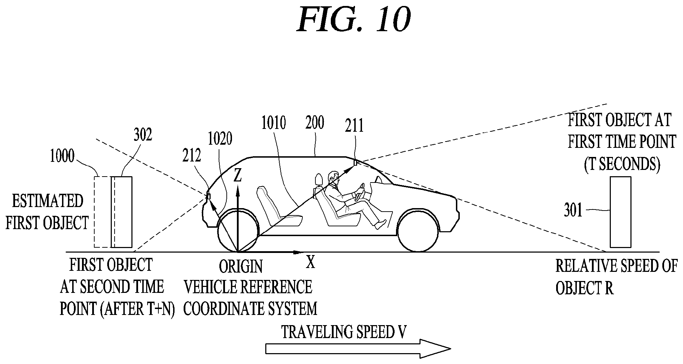

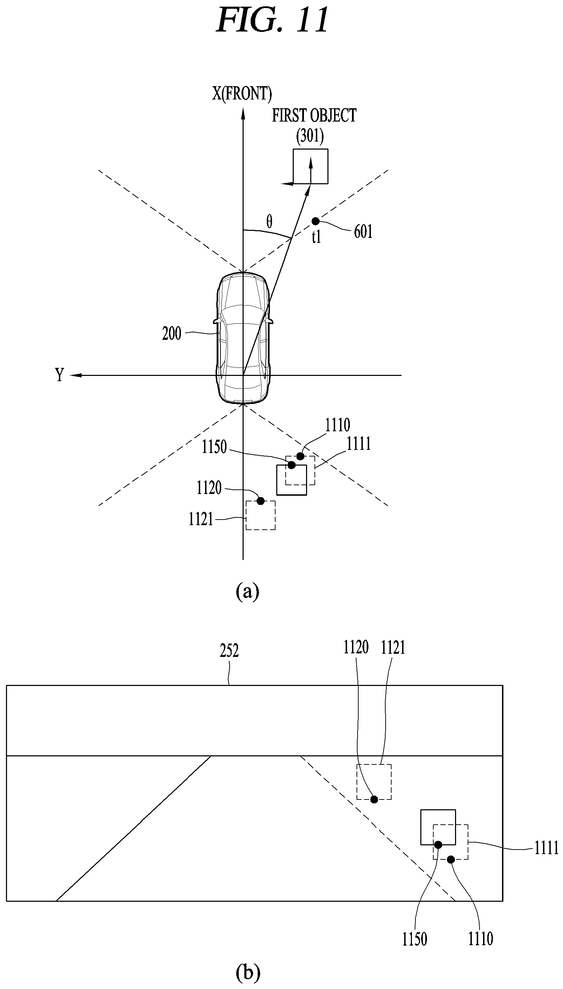

FIG. 9 is a flowchart of an operation process in which the AR information providing device according to an embodiment detects an object corresponding to the first object in this way inside the image captured by the second camera. FIGS. 10 and 11 are diagrams of examples of detecting an object matching a contour area displayed at an estimated position of a first object identified according to the operation process of FIG. 9 as an object corresponding to the first object. Here, the operation process of FIG. 9 may be performed to determine whether the first object has been detected in step S702 of FIG. 7.

Referring to FIG. 9, the processor 100 of the AR information providing device according to an embodiment may first project coordinates information related to a plurality of estimated positions of a first object, i.e., candidate positions, estimated on a vehicle reference coordinate system onto an image area of a currently determined second camera using calibration data of the second camera (S900).

FIG. 10 is a diagram of an example in which the AR information providing device according to an embodiment determines candidate positions in a corresponding image captured by the second camera, on which estimated positions of the first object after a certain period of time have been projected.

For example, as illustrated in FIG. 10, a first object 301 may be identified in a first camera (a front camera) 211. In this case, the position of the first object 301 may be calculated as three-dimensional coordinates (first coordinates) according to the image coordinate system of the first camera 211.

The processor 100 may control the ADAS 210 to convert the first coordinates of the first object 301 into coordinates on the vehicle reference coordinate system using first camera calibration data 1010 corresponding to the first camera 211. The first coordinates may be converted into coordinate information according to the vehicle reference coordinate system. In case that the first coordinates are converted into the coordinate information according to the vehicle reference coordinate system, the processor 100 may calculate estimated positions of the first object 301 after a lapse of a certain period of time based on the relative speed, relative distance, and relative angle between the first object 301 and the vehicle 200. The processor 100 may determine at least one second camera based on the generated estimated positions.

In some embodiments, in case that the second camera is the rear camera 212, the processor 100 may convert the coordinates of each estimated position, which has been converted into the coordinate information according to the vehicle reference coordinate system, into coordinates (second coordinates) 1000 according to the image coordinate system of the second camera 212, by using the calibration data 1020 of the second camera 212. For example, candidate positions projected onto the image area of the second camera may be determined.

In step S900, in case that the first coordinates of the first object are projected onto the image area of the second camera based on the calibration data of the second camera, the processor 100 may generate contour areas corresponding to feature information identified from the first object on each position inside the projected second camera image. Accordingly, a plurality of candidate objects, each having the same contour area as the contour areas according to feature information identified from the first object, on the plurality of candidate positions in the image of the second camera, respectively (S902).

The processor 100 may detect at least some candidate objects included in the display area, displayed on the display, of the image of the second camera (S904). The processor 100 may check whether there is a candidate object whose feature information including the contour area matches the feature information acquired from the first object by at least a certain ratio, among the objects identified in the image of the second camera (S906).

For example, in case of identifying objects from the image of the second camera, the processor 100 may determine the size of a contour area for each object included in the image of the second camera. The processor 100 may detect objects each having the size of the contour area, which matches a contour area of the first object by at least a certain ratio. The processor 100 may detect an object whose display position matches the contour areas where the candidate objects are displayed by at least a certain ratio, among the objects having the sizes of the contour areas matching by at least the certain ratio.

The processor 100 may detect an object corresponding to the first object, among objects included in the image of the second camera, by using at least one other feature information identified from the first object as well as the size and position of the contour area. For example, in case that there are two or more objects whose display position matches the contour areas where the candidate objects are displayed by at least a certain ratio, the processor 100 may detect an object corresponding to the first object by using different feature information about the first object, for example, color information.

In case that there is a candidate object, whose contour area and feature match the contour area and feature of the first object by at least the certain ratio, among the objects identified by the second camera according to the detection result of step S906, the processor 100 may estimate the object in the image of the second camera corresponding to the candidate object detected in step S906 as an object corresponding to the first object. Therefore, in case that the object corresponding to the first object is included in the second camera in step S702 of FIG. 7, the process may proceed to step S704 of FIG. 7, which displays the first AR object.

In some embodiments, in case that there is not a candidate object, whose contour area and feature match the contour area and feature of the first object by at least the certain ratio, among the objects identified by the second camera according to the detection result of step S906, the processor 100 may determine that the object corresponding to the first object is not included in the image of the second camera (S910). Accordingly, the process may proceed to step S706 of FIG. 7 of checking whether the estimated position of the first object has reached the time point at which the estimated position of the first object is included in the FOV of the second camera because the object corresponding to the first object is not included in the second camera in step S702 of FIG. 7.

FIG. 11 is a diagram of an example in which the AR information providing device according to an embodiment detects an object corresponding to the first object based on the generated candidate objects.

Referring to FIG. 11, first, as illustrated in (a) of FIG. 11, in case that the first object is identified by the front camera (the first camera), the processor 100 may project coordinate information on the reference coordinate system calculated based on coordinate information (first coordinates) about the first object 301 onto coordinates on the second camera image coordinate system based on second camera calibration data. Accordingly, as illustrated in (a) of FIG. 11, a first candidate position 1110 and a second candidate position 1120 may be determined.

Then, the processor 100 may generate virtual objects, i.e., candidate objects 1111 and 1121, having contour areas corresponding to feature information about the first object 301 acquired upon the identification of the first object 301, for example, the size of the contour area of the first object 301, on the first candidate position 1110 and the second candidate position 1120, respectively. Here, the first candidate object 1111 and the second candidate object 1121 may be three-dimensional objects having three-dimensional contour areas. Accordingly, as illustrated in (b) of FIG. 11, which illustrates the room mirror display 252 on which the image of the second camera, i.e., the rear camera, is displayed, the first candidate object 1111 and the second candidate object 1121 having the three-dimensional shapes may be generated.

In some embodiments, as illustrated in (a) and (b) of FIG. 11, in case that the candidate objects 1111 and 1121 having the three-dimensional shapes are generated, the processor 100 may detect objects whose contour areas are identical to the contour area of the first object 301 by at least a certain ratio, from among objects identified in the image of the second camera. The processor 100 may detect an object whose contour area matches the contour area of any one of the candidate objects 1111 and 1121 by at least the certain ratio, from among the detected objects.

For example, as illustrated in (a) and (b) of FIG. 11, in case that there is an object 1150 whose contour area overlaps the first candidate object 1111 by at least a certain ratio and whose size is similar to the size of the contour area of the first object 301, among the objects identified in the image of the second camera, the processor 100 may determine that the object corresponding to the first object 301 is included in the image of the second camera (step S908 of FIG. 9).

On the other hand, in case that there is not an object which is similar to the size of the contour area of the first object 301, or in case that there is not an object whose contour area overlaps the first candidate object 1111 or the second candidate object 1121 by at least the certain ratio even though the size of the contour area is similar, the processor 100 may determine that the object corresponding to the first object 301 is not included in the image of the second camera (step S910 of FIG. 9).

In the foregoing description, the example has been described in which an object whose contour area overlaps any candidate object by at least a certain ratio, among objects of a second camera, is estimated as an object corresponding to a first object. However, in case that there is a candidate position, i.e., a candidate position at which a distance between a position that an estimated position on the reference coordinate system has been converted into a second camera image coordinate system and a center position of an object is a certain distance or less, it may be estimated as the object corresponding to the first object being included in the image of the second camera. For example, the center position may be a position on a two-dimensional plane (XY plane) for each of at least one object having a contour area whose size is equal to or in a similar range to the first object, among objects included in the second camera.

As illustrated in more detail in FIG. 11, the center position may be a center point of an upper edge of the contour area on the XY plane of the object identified by the second camera. In this case, the plurality of candidate objects 1111 and 1121 may be objects generated such that a center of an upper edge of a bottom surface of a virtual object having a contour area corresponding to the size of the first object is located on each candidate position 1110 and 1120.

In some embodiments, the AR information providing device according to an embodiment may display a specific image area of the second camera in various ways to emphasize the specific image area of the second camera in case that a safe driving related event that should be provided to the driver is detected in an image area of the second camera.

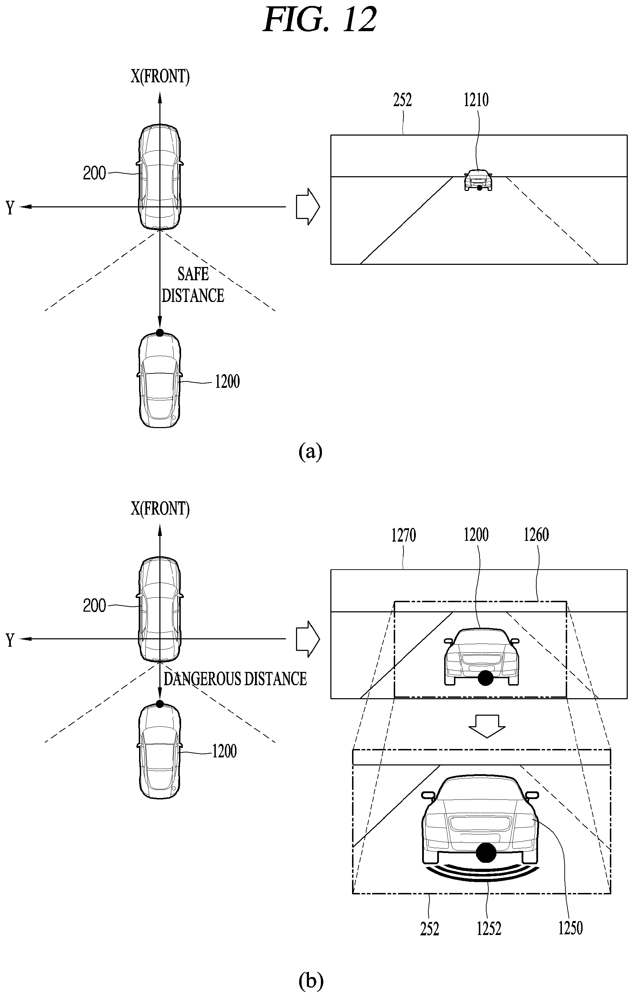

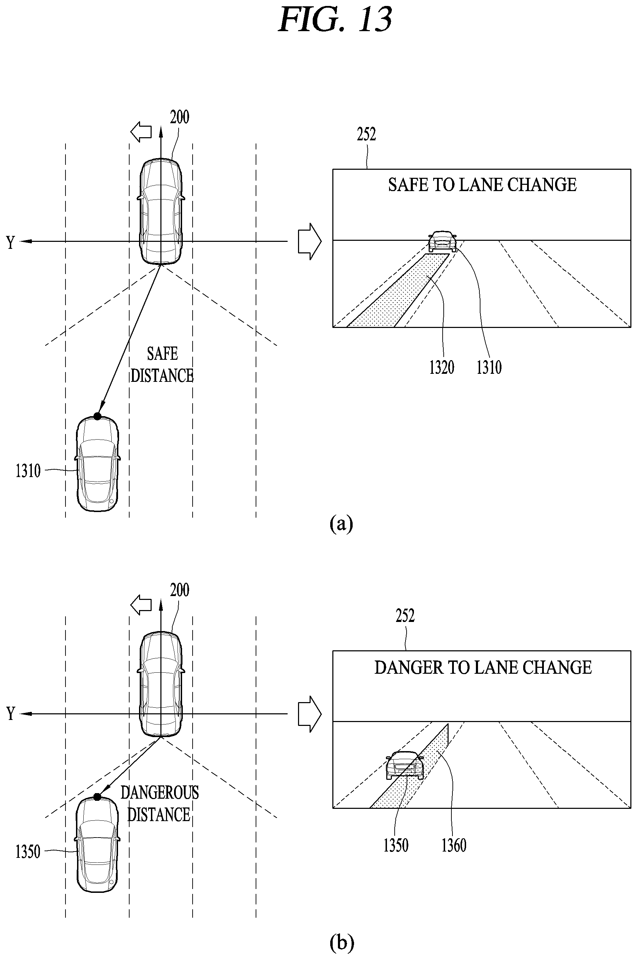

For example, in case that another object approaching within a preset distance is detected around the vehicle 200, the processor 100 may highlight and display an area within the second camera image that includes the detected object to emphasize the detected object. Alternatively, in case that the driving of the vehicle 200 is set by the user, the processor 100 may detect surrounding circumstances of the vehicle 200 and inform the user, using an AR object, of whether the detected surrounding circumstances of the vehicle 200 are safe for driving according to the setting. FIGS. 12 and 13 illustrate such examples.

First, referring to FIG. 12, as illustrated in (a) of FIG. 12, in case that another vehicle 1200 approaching from the rear of the vehicle 200 is located at at least a preset distance from the vehicle 200, the processor 100 may determine that the another vehicle 1200 is located at a distance which is at least a safe distance. In this case, as illustrated in (a) of FIG. 12, an image of the rear camera that does not include an AR object may be displayed on the room mirror display 252.

However, in case that the another object 1200 approaches the vehicle 200 at a distance less than the preset distance, the processor 100 may guide rear collision warning using AR information. To this end, the processor 100 may calculate an image range 1260 that satisfies the front of the another vehicle 1200 approaching from the rear of the vehicle 200, a road surface of an approach path, and the aspect ratio of the room mirror display 252. Here, the processor 100 may calculate the image range, inside the rear camera image, to include both a lane (a target lane) in which the another vehicle 1200 is located and an adjacent vehicle located within a danger distance on the target lane.

The processor 100 may set an area corresponding to the image range 1260 from the image acquired by the rear camera based on the another vehicle 1200 according to the calculated image range 1260. The processor 100 may enlarge the image of the set area to match the resolution of the room mirror display 252 on which the image of the rear camera is displayed.

Accordingly, as illustrated in (b) of FIG. 12, the image of the another vehicle 1200 that has approached by at least a certain distance may be prominently displayed on the room mirror display 252 by being enlarged. As illustrated in (b) of FIG. 12, the processor 100 may display an AR object 1252 for approach warning near the image of the another vehicle 1200 that has approached by at least the certain distance, thereby displaying the approaching vehicle 1200 more prominently.

In the above description, the case in which the another vehicle 1200 approaches within the preset distance or less from the vehicle 200 has been assumed, but it may of course be possible that such operation may be performed according to a user's selection or the user's preset vehicle manipulation.

For example, in case that a driver gazes at the room mirror display 252 for a certain period of time for the purpose of braking or observes the rear situation through the room mirror display 252 after braking, the processor 100 may detect other vehicles close to the vehicle 200 as illustrated in (b) of FIG. 12, and calculate time to collision (TTC) based on positions of the detected other vehicles and the position of the vehicle 200. In case that there is an object whose TTC is a certain value or less, the processor 100 may display the object by highlighting the object using an AR object as illustrated in (b) of FIG. 12.

In some embodiments, in case that a distance between adjacent another vehicle 1200 and the vehicle 200 exceeds the preset distance again, or in case that the another vehicle 1200 approaching moves out of the preset image range as the distance from the vehicle 200 increases, the processor 100 may restore the rear camera to an initial preset area. In another example, in case that the approaching vehicle 1200 and the vehicle 200 are closer to each other, the processor 100 may recalculate the image range and adjust the image on the room mirror display 252, on which the image of the rear camera is displayed, according to the recalculated image region. In this case, the adjusted image on the room mirror display 252 may include an AR object to more highlight the another vehicle 1200.

In some embodiments, in case that the distance between the another vehicle 1200 and the vehicle 200 is maintained for at least a certain period of time, the position of the another vehicle 1200 within the set image range may be maintained for at least the certain period of time. The processor 100 may determine that the driver has been sufficiently provided with the rear collision warning, and may restore the image settings of the rear camera back to initial setting.

Although the above description has been given using the rear camera as an example, the same may be applied to a side camera that acquires a side image of the vehicle 200 or a front camera that acquires the front image. In this case, the acquired image may also be displayed on a display other than the room mirror display.

In some embodiments, in case that the user manipulates an indicator light for driving the vehicle 200, the processor 100 of the AR information providing device according to an embodiment may detect the surrounding circumstances of the vehicle 200, and may also inform the user, using an AR object, of whether the detected surrounding circumstances of the vehicle 200 are safe for driving according to the indicator light. FIG. 13 illustrates such an example. For convenience of explanation, it is assumed that the camera that detects objects around the vehicle 200 is the rear camera, and a display on which the image of the rear camera is displayed is the room mirror display.

Referring to FIG. 13, the processor 100 of the AR information providing device according to an embodiment may detect a user's selection for lane change. For example, the processor 100 may detect whether the vehicle 200 is currently in a state where it may safely change lanes in case that the user turns on a turn signal in a specific direction, in case that the user gazes at a mirror in a direction toward a specific lane or a direction corresponding to the specific lane for at least a certain period of time, or in case that the lane change is selected by the user's voice command.

For example, in case that a lane to change is specified based on the turn signal or the user's selection as described above, the processor 100 may detect another vehicle 1310, which is adjacent to the vehicle 200 and located in the specified lane, through a rear detection sensor. In case that a distance between the detected another vehicle 1310 and the vehicle 200 is longer than or equal to a preset safe distance as illustrated in (a) of FIG. 13, the processor 100 may display an image of the rear camera, i.e. an AR image, including an AR object 1320 indicating that the change to the specified lane is safe, on the room mirror display 252. Here, the AR object 1320 indicating that the lane change is safe may be displayed in green.

In another example, in case that another vehicle 1350 or an obstacle located in another lane specified by a turn signal or user selection is within a safe distance from the vehicle 200, the processor 100 may determine that a lane change to the specified another lane is unsafe. The processor 100 may display an image of the rear camera including the another vehicle 1350 and the specific lane in an enlarged manner so that the adjacent another vehicle 1350 is more emphasized.

As illustrated in (b) of FIG. 13, the processor 100 may display an AR image including an AR object having a virtual wall shape, which is generated along the shape of the specified another lane, inside the image of the rear camera, on the room mirror display 252 where the image of the rear camera is displayed. Or, in addition to the AR object in the wall shape, the processor 100 may also display an AR object that marks the specific lane in red on the room mirror display 252 where the image of the rear camera is displayed, thereby informing the user that the lane change to the specified another lane is unsafe.

In some embodiments, the processor 100 may determine a camera that acquires an image of the specified lane according to the user's operation. For example, the processor 100 may generate an AR image based on an image acquired by a right digital side mirror camera in case that the user selects a lane change to a right lane. Alternatively, the processor 100 may generate an AR image based on an image acquired by a left digital side mirror camera in case that the user selects a lane change to a left lane. For example, the processor 100 may detect the user's operation on the vehicle 200 and determine a camera to acquire an image to overlap an AR object based on the detected operation.

The processor 100 may crop a display area to be displayed on a display, to include an area including a lane and another vehicle adjacent to the vehicle 200 in an acquired image. In this case, the processor 100 may crop a portion of the image acquired by the determined camera, so that the area including the lane and the another vehicle adjacent to the vehicle 200 is emphasized, scale the cropped portion, and display the scaled portion on the display.

In some embodiments, according to the above-described explanation, it has been explained that the AR information providing device according to an embodiment may display a second AR object that announces the appearance of a first object when the first object enters a blind spot as the vehicle 200 moves.

Here, in case of reaching a time point, i.e., a reference time point at which the first object deviates from the FOV of the first camera, the processor 100 may calculate estimated positions corresponding to time points after lapse of a certain period of time from the reference time point. The processor 100 may determine a second camera to acquire an image, in which the first object is to be included after the lapse of the certain period of time, based on the estimated positions.

In some embodiments, the processor 100 may calculate a time until the first object enters the FOV of the second camera based on the calculated estimated positions. In case that the first object passes the reference time point, the processor 100 may display differently a second AR object, which announces the appearance of the first object, as time passes, for example, as a time point at which the first object enters the FOV of the second camera approaches.

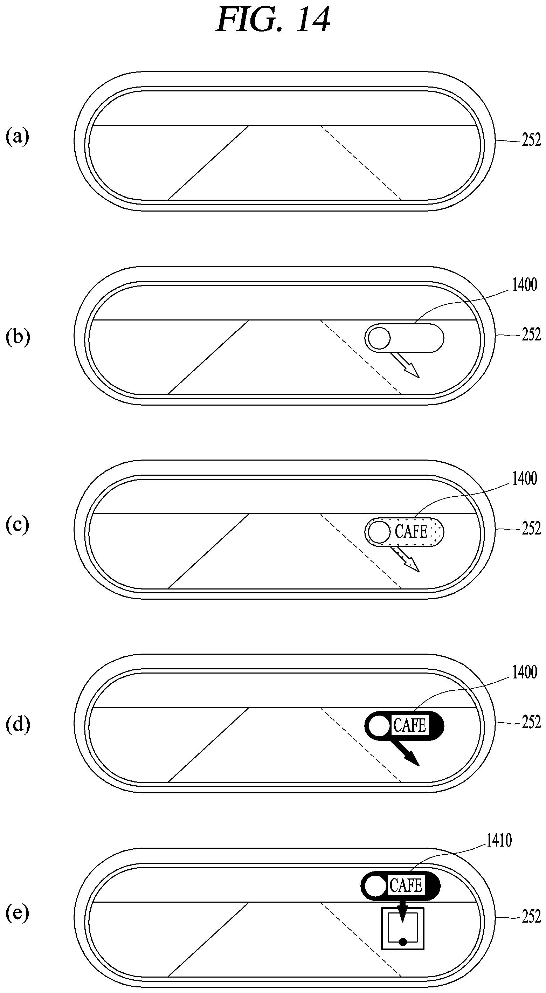

FIG. 14 is a diagram of an example in which the AR information providing device according to an embodiment differently displays the second AR object depending on the estimated position of the first object. For convenience of explanation, the following description will be given under assumption that a first camera is a front camera and a second camera is a rear camera. An example will be explained in which an image from the rear camera, i.e. the second camera, is displayed through the room mirror display 252. However, this is only an example for convenience of explanation, and the disclosure is not limited to this.

First, referring to (a) of FIG. 14, (a) of FIG. 14 assumes a case where an AR object (a first AR object) related to a first object is displayed on a display (e.g., the CID 251) that displays an image of the front camera as the first object does not pass a reference time point (e.g., t1 (601) of FIG. 6). In this case, as the first object is displayed on the CID 251, an AR image related to the first object may not be displayed on the room mirror display 252, as illustrated in (a) of FIG. 14.

In this state, in case that the first object reaches the reference time point as the vehicle 200 moves, the processor 100 may calculate a plurality of estimated positions of the first object at a time point after a certain period of time has elapsed from the reference time point. The processor 100 may determine a second camera based on the estimated positions. Upon the determination of the second camera, the processor may calculate a time, i.e., an appearance time, from the reference time point to a time point at which the first object enters the FOV of the second camera, based on the estimated positions of the first object.

And when the first object enters an area, for example, a blind spot, between the FOV of the first camera and the FOV of the second camera, the processor 100 may display an AR image including an AR object (second AR object) 1400, which announces the appearance of the first object, in an area of the second camera image opposing the estimated position of the first object, on the room mirror display 252, because the first object is not detected in the image of the first camera and is not included even in the determined image of the second camera.

In this case, the second AR object 1400 may have at least one of transparency or color (e.g., saturation) that changes as the appearance time point of the first object approaches. In some embodiments, in case that the calculated appearance time is at least a first time, the processor 100 may display the second AR object 1400 with high transparency or low saturation on the room mirror display 252, as illustrated in (b) of FIG. 14. However, in case that a remaining time of the appearance time is less than a second time (here, the first time is longer than the second time) as time passes, the processor 100 may display the second AR object 1400 with low transparency or high saturation on the room mirror display 252, as illustrated in (d) of FIG. 14.

In some embodiments, as time elapses, the transparency or saturation of the second AR object may change in an opposite manner depending on the elapsed time. Accordingly, as illustrated in (b) to (d) of FIG. 14, as a time point at which the first object disappeared from the image of the first camera is to be included in the image of the second camera approaches, the transparency of the second AR object may gradually decrease or the saturation of the second AR object may gradually increase.

In case that an object corresponding to the first object, for example, the first object, is included among objects identified from the image of the second camera, the processor 100, as illustrated in (e) of FIG. 14, may display an AR image including the first AR object, instead of the second AR object, on the room mirror display 252 where the image of the second camera, for example, the rear camera, is displayed.

In some embodiments, the above description has been given of the example in which the second AR object is displayed by changing the same, but it may of course be possible for the first AR object to be displayed differently over time. For example, even in case that the first AR object is displayed to overlap the image of the second camera because the first object is included in the image of the second camera, the processor 100 may cause the transparency or saturation of the first AR object displayed in the image of the second camera to change as a time elapsed from the time point, at which the first object has disappeared from the image of the first camera, for example, the reference time point, increases. In some embodiments, the processor 100 may adjust the first AR object displayed in the image of the second camera, so that the transparency increases or the saturation decreases as the first AR object is away from the vehicle 200.

The disclosure may be implemented as computer-readable codes in a program-recorded medium. The computer-readable medium may include all types of recording devices each storing data readable by a computer system. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). Also, the computer may include a controller of a terminal. Therefore, the detailed description should not be limitedly construed in all of the aspects, and should be understood to be illustrative. The scope of the present disclosure should be determined by reasonable interpretation of the appended claims, and all changes within the equivalent scope of the present disclosure are embraced by the appended claims.

## Claims

1. A device for providing augmented reality (AR) information, the device comprising:

   an interface unit configured to receive images, comprising a road environment around a vehicle and objects around the vehicle, from a plurality of cameras comprising a first camera and a second camera, and receive sensing information related to a traveling state of the vehicle;
   an AR module configured to render at least one AR object based on the sensing information, on the basis of an image captured by at least one of the plurality of cameras; and
   a processor configured to control the AR module to render a first AR object related to a first object, among objects included in an image of the first camera, and control a display unit of the vehicle through the interface unit so that a second AR object related to the first AR object is displayed in an image of the second camera in a direction opposing the first object.

2. The device of claim 1, wherein the processor calculates a three-dimensional position and relative speed of the first object detected from the image of the first camera, and estimates a three-dimensional position of the first object based on a time elapsed from a time at which the first object has been detected, and

controls the display unit such that the first AR object indicating the estimated three-dimensional position of the first object is displayed on the image of the first camera within a certain time in case that the first object is not detected from the image of the first camera.

3. The device of claim 2, wherein the processor displays information related to the first object in case that a user selects the AR object.

4. The device of claim 2, wherein the processor determines a camera for capturing an image around the estimated three-dimensional position, of the plurality of cameras, as a second camera based on the estimated three-dimensional position of the first object.

5. The device of claim 4, wherein the processor controls the interface unit such that an image of the second camera is displayed on the display unit, the image of the second camera comprising the second AR object announcing appearance of the first object based on the estimated position of the first object, in case that the second camera is determined.

6. The device of claim 5, wherein the processor predicts a time, at which the first object is to be included in the image of the second camera, based on the estimated position of the first object, in case that the first object is not detected from the image of the first camera, and

changes at least one of the first AR object or the second AR object according to a time elapsed from a time point at which the first object is not detected from the image of the first camera.

7. The device of claim 5, wherein the processor changes in opposite ways transparency of the first AR object and transparency of the second AR object or saturation of the first AR object and saturation of the second AR object according to a time elapsed from a time point at which the first object is not detected.

8. The device of claim 4, wherein the processor detects the first object based on an image captured by at least one other camera, except for the second camera, in case that the first object is not detected from the image of the determined second camera, and controls the interface unit such that an AR object related to the first object is displayed based on the image captured by the at least one other camera detecting the first object.

9. The device of claim 8, wherein the processor controls the interface unit such that the AR object related to the first object is displayed at a position corresponding to the estimated three-dimensional position on the image captured by the second camera, in case that the first object is not detected from the image captured by the at least one other camera.

10. The device of claim 1, wherein the processor calculates a distance from a center of the vehicle to the first object, calculates a time at which the first object deviates from a field of view (FOV) of the first camera, and calculates an elapsed time based on the calculated time, and

the processor estimates a plurality of candidate positions of the first object as three-dimensional positions according to different lapsed times for each preset unit time, determines the second camera based on at least one of the plurality of candidate positions, and identifies the first object included in the image captured by the second camera based on one of the plurality of candidate positions.

11. The device of claim 10, wherein the processor projects a shape corresponding to the first object onto each of the plurality of estimated positions in an image area including an area displayed through the display unit, and determines at least one candidate position including at least a portion of the shape corresponding to the first object, as a final candidate position, in a partial area in the image area displayed through the display unit, and

the processor estimates one final candidate position corresponding to an object having a shape, which overlaps the projected shape corresponding to the first object by at least a preset ratio, among objects included in the image captured by the second camera, as the three-dimensional position of the first object.

12. The device of claim 1, wherein the processor detects an occurrence of a preset safe driving-related event based on at least one of a distance between the first object included in the image of the second camera and the vehicle, a relative speed of the first object, a traveling direction of the first object, and a traveling direction of the vehicle, and

the processor crops a partial image including an area, in which the first object is included, of the image of the second camera, and controls the interface unit such that the cropped image is scaled and displayed, in case that the safe driving-related event occurs.

13. The device of claim 12, wherein the processor crops a portion of the image of the second camera to include at least one of a specific surface of the first object or an approach path of the first object, according to an aspect ratio of the display unit.

14. The device of claim 12, wherein the processor detects a preset user operation for the vehicle, and determines a third camera among the plurality of cameras based on the detected operation, and

the processor crops a partial area including at least one object from an image captured by the third camera, and controls the interface unit such that an image of the cropped area is scaled and displayed on the display unit.

15. The device of claim 12 or 14, wherein the processor controls the AR module to determine a level of risk with respect to at least one object included in the cropped area, based on at least one of a distance, speed, or traveling direction, and display a different AR object according to the determined level of risk.

16. The device of claim 14, wherein the user operation comprises an operation of turning on a turn signal to enter a specific lane or an operation of gazing at a mirror corresponding to a specific direction for at least a certain period of time,

the processor determines a camera, which captures the lane according to the turned-on turn signal or the specific direction corresponding to the mirror at which the user gazes for at least the certain period of time, as the third camera.

17. A method for controlling a device for providing augmented reality (AR) information, the method comprising:

identifying a first object included in a first camera among a plurality of cameras arranged in a vehicle;

displaying a first AR image including a first AR object related to the identified first object;

estimating at least one position of the first object after a certain period of time has elapsed;

determining a second camera to acquire an image of the first object after the lapse of the certain period of time based on the estimated position of the first object, among the plurality of cameras;

determining a display position according to a direction opposing the first object from an image acquired by the second camera; and,

controlling a display of the vehicle which displays the image acquired by the second camera, so that a second AR object related to the first object, different from the first AR object, is displayed at the determined display position.

# FIG. 1

# *FIG. 2*

```
                        ┌─────────┐
                        │  START  │
                        └────┬────┘
                             ▼
    ┌─────────────────────────────────────────────────┐
    │ IDENTIFY FIRST OBJECT AMONG OBJECTS INCLUDED IN  │──── S200
    │ FIRST CAMERA                                     │
    └─────────────────────┬───────────────────────────┘
                          ▼
    ┌─────────────────────────────────────────────────┐
    │ RENDER AND DISPLAY FIRST AR OBJECT RELATED TO    │──── S202
    │ IDENTIFIED FIRST OBJECT                          │
    └─────────────────────┬───────────────────────────┘
                          ▼
    ┌─────────────────────────────────────────────────┐
    │ DETERMINE SECOND CAMERA BASED ON ESTIMATED       │──── S204
    │ POSITION OF FIRST OBJECT AFTER CERTAIN PERIOD    │
    │ OF TIME                                          │
    └─────────────────────┬───────────────────────────┘
                          ▼
    ┌─────────────────────────────────────────────────┐
    │ DETERMINE DIRECTION OPPOSING POSITION (OR        │──── S206
    │ ESTIMATED POSITION) OF FIRST OBJECT IN SECOND    │
    │ CAMERA IMAGE                                     │
    └─────────────────────┬───────────────────────────┘
                          ▼
    ┌─────────────────────────────────────────────────┐
    │ RENDER AND DISPLAY SECOND AR OBJECT RELATED TO   │──── S208
    │ FIRST OBJECT AT ONE POSITION IN SECOND CAMERA    │
    │ IMAGE ACCORDING TO DETERMINED OPPOSING DIRECTION │
    └─────────────────────┬───────────────────────────┘
                          ▼
                    ┌─────────┐
                    │   END   │
                    └─────────┘
```

# FIG. 3

# FIG. 4

(a)

(b)

(c)

# FIG. 5

DETERMINE SECOND CAMERA BASED ON ESTIMATED POSITION OF FIRST OBJECT AFTER CERTAIN PERIOD OF TIME —— S204

↓

CONVERT COORDINATES OF FIRST OBJECT INTO COORDINATES ON REFERENCE 3D COORDINATE SYSTEM —— S500

↓

ESTIMATE AT LEAST ONE CANDIDATE POSITION OF FIRST OBJECT AFTER LAPSE OF DFFERENT CERTAIN PERIOD OF TIME —— S502

↓

DETERMINE SECOND CAMERA FROM AMONG PLURAL CAMERAS BASED ON AT LEAST ONE ESTIMATED POSITION OF FIRST OBJECT —— S504

↓

RETURN

## FIG. 6

X(FRONT)

FIRST OBJECT
(301)

RELATIVE SPEED
(TRANSVERSE
DIRECTION RY)

RELATIVE SPEED (LONGITUDINAL
DIRECTION RX)

θ

t1    601

FIRST DISTANCE D

200

Y

t1+1

t1+2

t1+3    602

t1+4

# *FIG. 7*

RENDER AND DISPLAY SECOND AR OBJECT RELATED TO FIRST OBJECT AT ONE POSITION IN SECOND CAMERA IMAGE ACCORDING TO DETERMINED OPPOSING DIRECTION —— S208

IDENTIFY OBJECTS INCLUDED IN SECOND CAMERA IMAGE —— S700

S702
HAS FIRST OBJECT BEEN DETECTED IN SECOND CAMERA IMAGE?

YES

S704
DISPLAY AR OBJECT CORRESPONDING TO DETECTED FIRST OBJECT AS SECOND AR OBJECT

NO

S708
DISPLAY AR OBJECT FOR ANNOUNCING APPEARANCE OF FIRST OBJECT AS SECOND AR OBJECT IN SECOND CAMERA IMAGE

S706
HAS ESTIMATED POSITION OF FIRST OBJECT REACHED TIME POINT OF BEING INCLUDED IN FOV OF SECOND CAMERA?

NO

YES

S710
IS THERE OBJECT OBSCURING ESTIMATED POSITION OF FIRST OBJECT ?

NO

YES

S712
DISPLAY AR OBJECT CORRESPONDING TO FIRST OBJECT AS SECOND AR OBJECT ON ESTIMATED POSITION OF FIRST OBJECT IN FIRST CAMERA IMAGE

S714
DETERMINE DISAPPEARANCE OF FIRST OBJECT

RETURN

# FIG. 8

(a)

(b)

(c)

# FIG. 9

START

PROJECT PLURAL CANDIDATE POSITIONS ON VEHICLE
REFERENCE COORDINATE SYSTEM ONTO IMAGE AREA
OF SECOND CAMERA USING SECOND CAMERA
CALIBRATION DATA — S900

GENERATE CANDIDATE OBJECT HAVING SAME CONTOUT
AREA AS FIRST OBJECT AT EACH OF PLURAL CANDIDATE
POSITIONS IN SECOND CAMERA IMAGE DETERMINED — S902
THROUGH IMAGE PROJECTION

DETECT CANDIDATE OBJECTS INCLUDED IN DISPLAY
AREA OF SECOND CAMERA IMAGE — S904

S906

IS THERE
CANDIDATE OBJECT HAVING
CONTOUR AREA AND FEATURE MATCHED BY          NO
AT LEAST CERTAIN RATIO, AMONG
OBJECTS IDENTIFIED IN
SECOND CAMERA ?

YES

S910

DETERMINE THAT FIRST OBJECT IS NOT
INCLUDED IN SECOND CAMERA IMAGE

ESTIMATE OBJECT CORRESPONDING TO DETECTED
CANDIDATE OBJECT AS OBJECT CORRESPONDING TO — S908
FIRST OBJECT

END

# FIG. 10

1000

302

1020
212

1010    200    211

FIRST OBJECT AT
FIRST TIME POINT
(T SECONDS)

ESTIMATED
FIRST OBJECT

Z

301

FIRST OBJECT
AT SECOND TIME
POINT (AFTER T+N)

ORIGIN
VEHICLE REFERENCE
COORDINATE SYSTEM

X

RELATIVE SPEED OF
OBJECT R

TRAVELING SPEED V

# FIG. 11

(a)

(b)

# FIG. 12

(a)

(b)

# FIG. 13

200

Y

SAFE
DISTANCE

1310

252

SAFE TO LANE CHANGE

1320    1310

(a)

200

Y

DANGEROUS
DISTANCE

1350

252

DANGER TO LANE CHANGE

1350    1360

(b)

# FIG. 14

(a) 252

(b) 1400 252

(c) 1400 CAFE 252

(d) 1400 CAFE 252

(e) 1410 CAFE 252

## INTERNATIONAL SEARCH REPORT

| | International application No. |
|---|---|
| | **PCT/KR2023/011851** |

| | |
|---|---|
| **A.** | **CLASSIFICATION OF SUBJECT MATTER** |

**B60R 1/28**(2022.01)i; **B60R 1/12**(2006.01)i

According to International Patent Classification (IPC) or to both national classification and IPC

| | |
|---|---|
| **B.** | **FIELDS SEARCHED** |

Minimum documentation searched (classification system followed by classification symbols)

B60R 1/28(2022.01); B60R 1/00(2006.01); B60W 50/14(2012.01); G06F 3/0481(2013.01); G06K 9/00(2006.01); G08B 21/00(2006.01); H04N 13/20(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 증강현실(augmented reality), 카메라(camera), 미러(mirror), 인터페이스 (interface), 디스플레이(display), 프로세서(processor), 제어(control), 3차원(three dimension), 크롭(crop), 중첩(overlay)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2021-0008503 A (RENAULT S.A.S.) 22 January 2021 (2021-01-22) See paragraphs [0014], [0023]-[0027], [0033], [0037]-[0038] and [0280], claims 1-2 and 4 and figures 1-2. | 1-4,17 |
| A | | 5-16 |
| Y | KR 10-2019-0016815 A (LG ELECTRONICS INC.) 19 February 2019 (2019-02-19) See paragraphs [0083], [0096], [0099], [0103]-[0104], [0294], [0353] and [0388], claims 1, 6-7, 11 and 19 and figure 7. | 1-4,17 |
| A | KR 10-2104500 B1 (SAMSUNG ELECTRONICS CO., LTD.) 24 April 2020 (2020-04-24) See claim 1 and figure 3a. | 1-17 |
| A | KR 10-2019-0011577 A (LG ELECTRONICS INC.) 07 February 2019 (2019-02-07) See claims 1, 15 and 20 and figure 7. | 1-17 |

| ☑ | Further documents are listed in the continuation of Box C. | ☑ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 November 2023** | **20 November 2023** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011851** |

### C. DOCUMENTS CONSIDERED TO BE RELEVANT

| Category* | Citation of document, with indication, where appropriate, of the relevant passages | Relevant to claim No. |
| --- | --- | --- |
| A | US 10410426 B2 (GM GLOBAL TECHNOLOGY OPERATIONS L.L.C.) 10 September 2019 (2019-09-10)<br>        See claims 1 and 12 and figure 3. | 1-17 |

Form PCT/ISA/210 (second sheet) (July 2022)

## INTERNATIONAL SEARCH REPORT
### Information on patent family members

| International application No. |
| --- |
| **PCT/KR2023/011851** |

| Patent document cited in search report | | | Publication date (day/month/year) | Patent family member(s) | | | Publication date (day/month/year) |
| --- | --- | --- | --- | --- | --- | --- | --- |
| KR | 10-2021-0008503 | A | 22 January 2021 | CN | 112204626 | A | 08 January 2021 |
| | | | | EP | 3794563 | A1 | 24 March 2021 |
| | | | | FR | 3081250 | A1 | 22 November 2019 |
| | | | | FR | 3081250 | B1 | 13 August 2021 |
| | | | | WO | 2019-219288 | A1 | 21 November 2019 |
| KR | 10-2019-0016815 | A | 19 February 2019 | EP | 3441725 | A1 | 13 February 2019 |
| | | | | EP | 3441725 | B1 | 31 May 2023 |
| | | | | EP | 4243434 | A1 | 13 September 2023 |
| | | | | US | 10803643 | B2 | 13 October 2020 |
| | | | | US | 2019-0051030 | A1 | 14 February 2019 |
| KR | 10-2104500 | B1 | 24 April 2020 | EP | 2703873 | A2 | 05 March 2014 |
| | | | | EP | 2703873 | A3 | 11 June 2014 |
| | | | | EP | 2703873 | B1 | 03 October 2018 |
| | | | | EP | 3413118 | A1 | 12 December 2018 |
| | | | | EP | 3413118 | B1 | 09 October 2019 |
| | | | | EP | 3588168 | A1 | 01 January 2020 |
| | | | | EP | 3706098 | A1 | 09 September 2020 |
| | | | | KR | 10-1957943 | B1 | 04 July 2019 |
| | | | | KR | 10-2020-0043349 | A | 27 April 2020 |
| | | | | KR | 10-2282368 | B1 | 27 July 2021 |
| | | | | US | 10002462 | B2 | 19 June 2018 |
| | | | | US | 2014-0063064 | A1 | 06 March 2014 |
| | | | | US | 2018-0261014 | A1 | 13 September 2018 |
| | | | | US | 2020-0219325 | A1 | 09 July 2020 |
| | | | | WO | 2014-035148 | A1 | 06 March 2014 |
| KR | 10-2019-0011577 | A | 07 February 2019 | EP | 3434524 | A1 | 30 January 2019 |
| | | | | EP | 3434524 | B1 | 23 October 2019 |
| | | | | US | 11004245 | B2 | 11 May 2021 |
| | | | | US | 2019-0035127 | A1 | 31 January 2019 |
| US | 10410426 | B2 | 10 September 2019 | CN | 109936834 | A | 25 June 2019 |
| | | | | CN | 109936834 | B | 07 June 2022 |
| | | | | DE | 102018132909 | A1 | 19 June 2019 |
| | | | | US | 2019-0188912 | A1 | 20 June 2019 |

Form PCT/ISA/210 (patent family annex) (July 2022)